# EUROPEAN PATENT APPLICATION

(11) **EP 4 535 901 A1**
(43) Date of publication of application: **09.04.2025**
(21) Application number: 23830128.7
(22) Date of filing: 25.06.2023
(51) Int. Cl.: H04W 72/04

(54) **DATA TRANSMISSION METHOD AND APPARATUS**

(30) Priority: 30.06.2022 CN 202210771939
(71) Applicant: Huawei Technologies Co., Ltd., Shenzhen, Guangdong 518129 (CN)
(72) Inventor: GU, Zhifang, Shenzhen, Guangdong 518129 (CN); LOU, Chong, Shenzhen, Guangdong 518129 (CN); FAN, Qiang, Shenzhen, Guangdong 518129 (CN)
(74) Representative: Pfenning, Meinig & Partner mbB
(86) International application number: PCT/CN2023/102100
(87) International publication number: WO 2024/001950

(57) **Abstract**

This application provides a data transmission method and an apparatus. The method includes: A first central unit receives data from a user plane function network element, and then determines time information corresponding to the data, where the time information is used by a first distributed unit and a second distributed unit to synchronously transmit the data Further, the first central unit separately sends the data and the time information to the first distributed unit and the second distributed unit. The first distributed unit and the second distributed unit send the data to a terminal device based on the time information. According to the method, the first distributed unit and the second distributed unit can perform synchronous transmission to the terminal device, to improve data transmission reliability.

## Description

This application claims priority to Chinese Patent Application No. 202210771939.2, filed with the China National Intellectual Property Administration on June 30, 2022 and entitled "DATA TRANSMISSION METHOD AND APPARATUS", which is incorporated herein by reference in its entirety.

### TECHNICAL FIELD

This application relates to the communication field, and more specifically, to a data transmission method and an apparatus.

### BACKGROUND

To improve a capacity and reliability of wireless communication, a terminal device may be served by a plurality of network devices at the same time. For example, the terminal device may communicate with a plurality of transmission reception points (transmission reception points, TRPs) located in different geographical locations. The plurality of TRPs may be a plurality of physical antennas belonging to one base station, or may be a plurality of physical antennas belonging to different base stations. These TRPs need to coordinate to jointly serve the terminal device. In some multi-TRP coordination manners, same data content needs to be sent from a plurality of TRPs to UE at a same moment.

In addition, in a 5th generation mobile communication technology (5th generation mobile communication technology, 5G) system, a base station uses a manner in which a central unit (central unit, CU) and a distributed unit (distributed unit, DU) are independently deployed. To be specific, some functions of the base station are deployed in one CU, remaining functions are deployed in DUs, and a plurality of DUs share one CU. This saves costs, and facilitates network expansion. CU-DU separation may be performed by protocol stacks. In a possible manner, a radio resource control (radio resource control, RRC) layer, a service data adaptation protocol (service data adaptation protocol, SDAP) layer, and a packet data convergence protocol (packet data convergence protocol, PDCP) layer are deployed in the CU, and the rest of layers: a radio link control (radio link control, RLC) layer, a media access control (media access control, MAC) layer, and a physical (physical, PHY) layer, are deployed in the DU.

How to implement synchronous transmission in a CU-DU separation architecture is a problem that needs to be considered currently.

### SUMMARY

This application provides a data transmission method and an apparatus, so that different distributed units can perform synchronous transmission to a terminal device, to improve data transmission reliability.

According to a first aspect, a data transmission method is provided. The method may be performed by a central unit in an access network device, or may be performed by a component (for example, a chip or a circuit) of the central unit. This is not limited. For ease of description, the following uses an example in which the method is performed by a first central unit for description.

The method includes: The first central unit receives data from a user plane function network element; the first central unit determines time information used by a first distributed unit and a second distributed unit to synchronously transmit the data; and the first central unit sends the data and the time information to the first distributed unit, and sends the data and the time information to the second distributed unit.

According to the foregoing solution, after determining the time information corresponding to the data, the first central unit separately sends the data and the time information to the first distributed unit and the second distributed unit, so that the first distributed unit and the second distributed unit can synchronously transmit the data based on the time information, to improve data transmission reliability.

According to a second aspect, a data transmission method is provided. The method may be performed by a central unit in an access network device, or may be performed by a component (for example, a chip or a circuit) of the central unit. This is not limited. For ease of description, the following uses an example in which the method is performed by a first central unit for description.

The method includes: The first central unit receives data from a user plane function network element; the first central unit determines time information used by a first distributed unit and a second distributed unit to synchronously transmit the data; the first central unit sends the data and the time information to the first distributed unit; and the first central unit sends, to a second central unit, the time information and information indicating the data, where the second central unit corresponds to the second distributed unit.

According to the foregoing solution, in a scenario in which the first distributed unit and the second distributed unit perform synchronous transmission to the terminal device, after receiving the data from the user plane function network element, the first central unit determines the time information corresponding to the data, and sends the time information to the first distributed unit and the second central unit corresponding to the second distributed unit, so that the second central unit can send the time information to the second distributed unit, and the first distributed unit and the second distributed unit can synchronously transmit the data based on the time information, to improve data transmission reliability.

With reference to the first aspect or the second aspect, in a possible implementation, that the first central unit determines time information used by a first distributed unit and a second distributed unit to synchronously transmit the data includes: The first central unit determines the time information based on one or more of the following information: a size of cached data in the first distributed unit, a size of cached data in the second distributed unit, a transmission delay between the first central unit and the first distributed unit, a transmission delay between the first central unit and the second distributed unit, duration for processing the data by the first distributed unit, duration for processing the data by the second distributed unit, a transmission delay between the first distributed unit and a terminal device, a transmission delay between the second distributed unit and the terminal device, and indication information from the first distributed unit and/or the second distributed unit, where the indication information is used to adjust the time information.

With reference to the first aspect or the second aspect, in a possible implementation, the method further includes: The first central unit sends, to the second central unit based on first configuration information used for communication between the first distributed unit and the terminal device, second configuration information used for communication between the second distributed unit and the terminal device, where the second central unit corresponds to the second distributed unit.

According to the foregoing solution, the first central unit sends the second configuration information to the second central unit, where the second configuration information is used by the second distributed unit to communicate with the terminal device, and the second configuration information may be the same as the first configuration information, or may be information determined based on the first configuration information. According to this solution, the first distributed unit and the second distributed unit may perform transmission to the terminal device by using a same configuration, to ensure that the first distributed unit and the second distributed unit can synchronously send the data to the terminal device, and improve efficiency and reliability of synchronous transmission.

With reference to the first aspect or the second aspect, in a possible implementation, the first configuration information includes one or more of the following information: channel configuration information of a physical layer of the first distributed unit, configuration information of a media access control layer of the first distributed unit, configuration information of a radio link control layer of the first distributed unit, and configuration information of a packet data convergence protocol layer of the first central unit; and the second configuration information includes one or more of the following information: channel configuration information of a physical layer of the second distributed unit, configuration information of a media access control layer of the second distributed unit, configuration information of a radio link control layer of the second distributed unit, and configuration information of a packet data convergence protocol layer of the second central unit.

With reference to the first aspect or the second aspect, in a possible implementation, the method further includes: The first central unit sends, to the second central unit, information for requesting to perform synchronous transmission to the terminal device, where the second central unit corresponds to the second distributed unit; and the first central unit receives, from the second central unit, information indicating that the request for performing synchronous transmission to the terminal device is accepted.

With reference to the first aspect or the second aspect, in a possible implementation, before that the first central unit receives data from a user plane function network element, the first central unit determines the second central unit based on one or more of the following: a measurement result of a signal of the second central unit; a transmission delay between the first central unit and the second central unit; and a distance between the first central unit and the second central unit.

With reference to the first aspect or the second aspect, in a possible implementation, the time information indicates one or more of the following: time for processing the data at the packet data convergence protocol layer; time for processing the data at the radio link control layer; time for processing the data at the media access control layer; and time for sending the data to the terminal device.

According to a third aspect, a data transmission method is provided. The method may be performed by a terminal device, or may be performed by a component (for example, a chip or a circuit) of the terminal device. This is not limited. For ease of description, the following uses an example in which the method is performed by the terminal device for description.

The method includes: The terminal device receives information about cached data from a first distributed unit; and the terminal device separately sends indication information to the first distributed unit and a second distributed unit, where the indication information is determined based on the information about the cached data, and the indication information indicates data synchronously transmitted by the first distributed unit and the second distributed unit to the terminal device.

According to the foregoing solution, the terminal device may determine, based on the information about the cached data from the first distributed unit, the indication information for indicating the data that needs to be synchronously transmitted, and send the indication information to the first distributed unit and the second distributed unit, so that the first distributed unit and the second distributed unit can synchronously send, to the terminal device based on the indication information, the data indicated by the indication information, to improve data transmission reliability.

With reference to the third aspect, in some implementations of the third aspect, the method further includes: The terminal device further receives information about cached data from the second distributed unit; and the terminal device determines the indication information when determining, based on the cached data in the first distributed unit and the cached data in the second distributed unit, that synchronous transmission can be performed.

With reference to the third aspect, in some implementations of the third aspect, the determining, based on the cached data in the first distributed unit and the cached data in the second distributed unit, that synchronous transmission can be performed includes: determining that there is same data between the cached data in the first distributed unit and the cached data in the second distributed unit; or determining that an amount of cached data in the first distributed unit is the same as an amount of cached data in the second distributed unit; or determining that a size of the cached data in the first distributed unit is the same as a size of the cached data in the second distributed unit.

With reference to the third aspect, in some implementations of the third aspect, the method further includes: The terminal device further receives the information about the cached data from the second distributed unit; and sends a notification message to the first distributed unit and/or the second distributed unit when determining, based on the cached data in the first distributed unit and the cached data in the second distributed unit, that synchronous transmission cannot be performed, where the notification message is for notifying that the cached data in the first distributed unit and the cached data in the second distributed unit cannot be synchronously transmitted.

With reference to the third aspect, in some implementations of the third aspect, the determining, based on the cached data in the first distributed unit and the cached data in the second distributed unit, that synchronous transmission cannot be performed includes: determining that there is no same data between the cached data in the first distributed unit and the cached data in the second distributed unit; or determining that an amount of cached data in the first distributed unit is different from an amount of cached data in the second distributed unit; or determining that an amount of cached data in the first distributed unit is different from a size of the cached data in the second distributed unit.

According to the foregoing solution, when the cached data in the first distributed unit and the cached data in the second distributed unit cannot be synchronously transmitted, the terminal device may notify the first distributed unit and the second distributed unit, so that the first distributed unit and the second distributed unit can synchronize the cached data, to improve efficiency and reliability of synchronous transmission.

With reference to the third aspect, in some implementations of the third aspect, the information about the cached data includes one or more of the following: a sequence number of the cached data, an amount of cached data, and a size of the cached data.

With reference to the third aspect, in some implementations of the third aspect, before that the terminal device receives information about cached data from a first distributed unit, the method further includes: The terminal device receives identification information of the second distributed unit from the first distributed unit, where the second distributed unit is configured to perform synchronous transmission with the first distributed unit to the terminal device.

According to the foregoing solution, in a scenario in which the first distributed unit and the second distributed unit perform synchronous transmission to the terminal device, the first distributed unit may send the identification information of the second distributed unit to the terminal device. In this case, even if the terminal device receives the information about the cached data in the first distributed unit, the terminal device may send the indication information to the first distributed unit and the second distributed unit, so that the first distributed unit and the second distributed unit can synchronously send, to the terminal device based on the indication information, the data indicated by the indication information.

With reference to the third aspect, in some implementations of the third aspect, the indication information indicates one or more of the following: a sequence number of synchronously transmitted data; a size of the synchronously transmitted data; and a processing window of the synchronously transmitted data at a radio link control layer.

With reference to the third aspect, in some implementations of the third aspect, the method further includes: The terminal device separately sends time information to the first distributed unit and the second distributed unit, where the time information indicates time for sending the data to the terminal device.

In the foregoing solution, in addition to sending the indication information to the first distributed unit and the second distributed unit, the terminal device may further send the time information to the first distributed unit and the second distributed unit. The time information indicates sending time of the data indicated by the indication information. The first distributed unit and the second distributed unit may synchronously send the data to the terminal device based on the time information.

According to a fourth aspect, a data transmission method is provided. The method may be performed by a distributed unit in an access network device, or may be performed by a component (for example, a chip or a circuit) of the distributed unit. This is not limited. For ease of description, the following uses an example in which the method is performed by a first distributed unit for description.

The method includes: The first distributed unit receives data from a first central unit and time information used by the first distributed unit and a second distributed unit to synchronously transmit the data; and the first distributed unit sends the data to a terminal device based on the time information.

According to the foregoing solution, after receiving the data from the first central unit and the time information, the first distributed unit sends the data to the terminal device based on the time information. Because the time information is used by the first distributed unit and the second distributed unit to synchronously transmit the data, if the second distributed unit also sends the data to the terminal device based on the time information, the first distributed unit and the second distributed unit can synchronously send the data to the terminal device, to improve data transmission reliability.

With reference to the fourth aspect, in some implementations of the fourth aspect, the method further includes: The first distributed unit retransmits the data when the first distributed unit determines that the data fails to be sent.

According to the foregoing solution, the data that fails to be sent is retransmitted, so that the data transmission reliability can be improved.

With reference to the fourth aspect, in some implementations of the fourth aspect, the method further includes: The first distributed unit sends, to the second distributed unit, information indicating that the data fails to be sent.

According to the foregoing solution, when the data fails to be sent, the first distributed unit may indicate, to the second distributed unit, that the data fails to be sent, so that the second distributed unit and the first distributed unit synchronously transmit the data, and synchronize cached downlink data in the first distributed unit and cached downlink data in the second distributed unit, to avoid a case in which a subsequent synchronous transmission failure is caused because the downlink data is not synchronized.

With reference to the fourth aspect, in some implementations of the fourth aspect, that the first distributed unit retransmits the data when the first distributed unit determines that the data fails to be sent includes: When the first distributed unit determines that the data fails to be sent, the first distributed unit retransmits the data at a next available moment of a moment that corresponds to a hybrid automatic repeat request process number and at which the data is sent.

According to the foregoing solution, when the data fails to be sent, the first distributed unit may retransmit the data at the next available moment of the moment that corresponds to the hybrid automatic repeat request process number and at which the data is sent, and other data corresponding to the hybrid automatic repeat request process number may be sequentially transmitted, so that the data transmission efficiency can be improved.

With reference to the fourth aspect, in some implementations of the fourth aspect, that the first distributed unit determines that the data fails to be sent includes: The first distributed unit receives a first feedback message from the terminal device, where the first feedback message indicates that the terminal device fails to receive the data; or the first distributed unit does not receive a second feedback message from the terminal device, where the second feedback message indicates that the terminal device successfully receives the data.

With reference to the fourth aspect, in some implementations of the fourth aspect, the time information indicates one or more of the following: time for processing the data at a packet data convergence protocol layer; time for processing the data at a radio link control layer; time for processing the data at a media access control layer; and time for sending the data to the terminal device.

With reference to the fourth aspect, in some implementations of the fourth aspect, the method further includes: The first distributed unit sends information about cached data to the first central unit, where the information about the cached data is for determining the time information.

According to a fifth aspect, a communication method is provided. The method may be performed by a central unit in an access network device, or may be performed by a component (for example, a chip or a circuit) of the central unit. This is not limited. For ease of description, the following uses an example in which the method is performed by a first central unit for description.

The method includes: The first central unit receives data from a user plane function network element and time information corresponding to the data; and the first central unit sends the data and the time information to a first distributed unit, where the time information is used by the first distributed unit and a second distributed unit to synchronously transmit the data.

According to the foregoing solution, after receiving, from the user plane function network element, the data and the time information corresponding to the data, the first central unit sends the data and the time information to the first distributed unit, so that the first distributed unit can synchronously transmit the data with the second distributed unit based on the time information, to improve data transmission reliability.

With reference to the fifth aspect, in some implementations of the fifth aspect, the method further includes: The first central unit sends, to a second central unit based on first configuration information used for communication between the first distributed unit and a terminal device, second configuration information used for communication between the second distributed unit and the terminal device, where the second central unit corresponds to the second distributed unit.

With reference to the fifth aspect, in some implementations of the fifth aspect, the first configuration information includes one or more of the following information: channel configuration information of a physical layer of the first distributed unit, configuration information of a media access control layer of the first distributed unit, configuration information of a radio link control layer of the first distributed unit, and configuration information of a packet data convergence protocol layer of the first central unit.

With reference to the fifth aspect, in some implementations of the fifth aspect, the method further includes: The first central unit sends, to the second central unit, information for requesting to perform synchronous transmission to the terminal device, where the second central unit corresponds to the second distributed unit; and the first central unit receives, from the second central unit, information indicating that the request for performing synchronous transmission to the terminal device is accepted.

With reference to the fifth aspect, in some implementations of the fifth aspect, before that the first central unit receives data from a user plane function network element, the first central unit determines the second central unit based on one or more of the following: a measurement result of a signal of the second central unit; a transmission delay between the first central unit and the second central unit; and a distance between the first central unit and the second central unit.

With reference to the fifth aspect, in some implementations of the fifth aspect, the method further includes: The first central unit sends information about cached data in the first distributed unit to the user plane function network element, where the information about the cached data is for determining the time information.

With reference to the fifth aspect, in some implementations of the fifth aspect, the time information indicates one or more of the following: time for processing the data at a packet data convergence protocol layer; time for processing the data at a radio link control layer; time for processing the data at a media access control layer; and time for sending the data to the terminal device.

According to a sixth aspect, a data transmission method is provided. The method may be performed by a distributed unit in an access network device, or may be performed by a component (for example, a chip or a circuit) of the distributed unit. This is not limited. For ease of description, the following uses an example in which the method is performed by a first distributed unit for description.

The method includes: The first distributed unit receives indication information from a terminal device, where the indication information indicates information about data that is synchronously transmitted by the first distributed unit and a second distributed unit to the terminal device; and the first distributed unit sends the data to the terminal device based on the indication information.

According to the foregoing solution, the first distributed unit sends, to the terminal device based on the indication information from the terminal device, the data indicated by the indication information. The indication information indicates the information about the data that is synchronously transmitted by the first distributed unit and the second distributed unit to the terminal device. Therefore, the second distributed unit also sends the data to the terminal device based on the indication information, so that the first distributed unit and the second distributed unit can synchronously transmit the data to the terminal device, to improve data transmission reliability.

With reference to the sixth aspect, in some implementations of the sixth aspect, before that a first distributed unit receives indication information from a terminal device, the method further includes: The first distributed unit sends information about cached data to the terminal device, where the information about the cached data is for determining the indication information.

With reference to the sixth aspect, in some implementations of the sixth aspect, the information about the cached data includes one or more of the following: a sequence number of the cached data, an amount of cached data, and a size of the cached data.

With reference to the sixth aspect, in some implementations of the sixth aspect, before that a first distributed unit receives indication information from a terminal device, the method further includes: The first distributed unit sends identification information of the second distributed unit to the terminal device, where the second distributed unit is configured to perform synchronous transmission with the first distributed unit to the terminal device.

According to the foregoing solution, the first distributed unit may further send the identification information of the second distributed unit to the terminal device, so that the terminal device may determine, based on the identification information of the second distributed unit, that the second distributed unit performs synchronous transmission with the first distributed unit to the terminal device, and the terminal device may send the indication information to the first distributed unit and the second distributed unit.

With reference to the sixth aspect, in some implementations of the sixth aspect, the indication information indicates one or more of the following: a sequence number of synchronously transmitted data; a size of the synchronously transmitted data; and a processing window of the synchronously transmitted data at a radio link control layer.

With reference to the sixth aspect, in some implementations of the sixth aspect, the method further includes: The first distributed unit receives time information from the terminal device, where the time information indicates time for sending the data to the terminal device; and that the first distributed unit sends the data to the terminal device based on the indication information includes: the first distributed unit sends the data to the terminal device at the time indicated by the time information.

According to a seventh aspect, a communication method is provided. The method may be performed by a user plane function network element, or may be performed by a component (for example, a chip or a circuit) of the user plane function network element. This is not limited herein. For ease of description, the following uses an example in which the method is performed by the user plane function network element for description.

The method includes: The user plane function network element determines time information used by a first distributed unit and a second distributed unit to synchronously transmit data; and the user plane function network element sends the data and the time information to a first central unit, where the first central unit corresponds to the first distributed unit.

According to the foregoing solution, the user plane function network element may determine the time information corresponding to the data, and send the data and the time information to the first central unit, so that the first central unit can send the data and the time information to the first distributed unit and the second distributed unit that perform synchronous transmission, and the first distributed unit and the second distributed unit can synchronously send the data to a terminal device based on the time information.

With reference to the seventh aspect, in some implementations of the seventh aspect, the method further includes: The user plane function network element sends the data and the time information to a second central unit, where the second central unit corresponds to the second distributed unit.

With reference to the seventh aspect, in some implementations of the seventh aspect, that the user plane function network element determines time information used by a first distributed unit and a second distributed unit to synchronously transmit data includes: The user plane function network element determines the time information based on one or more of the following information: information about cached data in the first distributed unit, information about cached data in the second distributed unit, a transmission delay between the first central unit and the first distributed unit, a transmission delay between the second central unit and the second distributed unit, duration for processing the data by the first central unit and/or duration for processing the data by the first distributed unit, duration for processing the data by the second central unit and/or duration for processing the data by the second distributed unit, duration for duplicating and processing the data by the user plane function network element, a transmission delay between the user plane function network element and the first central unit, and a transmission delay between the user plane function network element and the second central unit.

With reference to the seventh aspect, in some implementations of the seventh aspect, the time information indicates one or more of the following: time for processing the data at a packet data convergence protocol layer; time for processing the data at a radio link control layer; time for processing the data at a media access control layer; and time for sending the data to the terminal device.

According to an eighth aspect, a data transmission apparatus is provided. The apparatus includes: a transceiver module, configured to receive data from a user plane function network element; and a processing module, configured to determine time information used by a first distributed unit and a second distributed unit to synchronously transmit the data, where the transceiver module is further configured to send the data and the time information to the first distributed unit, and send the data and the time information to the second distributed unit.

In another implementation, the apparatus includes: a transceiver module, configured to receive data from a user plane function network element; and a processing module, configured to determine time information used by a first distributed unit and a second distributed unit to synchronously transmit the data, where the transceiver module is further configured to send the data and the time information to the first distributed unit; and the first central unit sends, to a second central unit, the time information and information indicating the data, where the second central unit corresponds to the second distributed unit.

With reference to the eighth aspect, in some implementations of the eighth aspect, the processing module is specifically configured to determine the time information based on one or more of the following information: a size of cached data in the first distributed unit, a size of cached data in the second distributed unit, a transmission delay between the apparatus and the first distributed unit, a transmission delay between the apparatus and the second distributed unit, duration for processing the data by the first distributed unit, duration for processing the data by the second distributed unit, indication information from the first distributed unit and/or the second distributed unit, where the indication information is used to adjust the time information.

With reference to the eighth aspect, in some implementations of the eighth aspect, the processing module is further configured to send, to the second central unit based on first configuration information used for communication between the first distributed unit and the terminal device, second configuration information used for communication between the second distributed unit and the terminal device, where the second central unit corresponds to the second distributed unit.

With reference to the eighth aspect, in some implementations of the eighth aspect, the first configuration information includes one or more of the following information: channel configuration information of a physical layer of the first distributed unit, configuration information of a media access control layer of the first distributed unit, configuration information of a radio link control layer of the first distributed unit, and configuration information of a packet data convergence protocol layer of the apparatus; and the second configuration information includes one or more of the following information: channel configuration information of a physical layer of the second distributed unit, configuration information of a media access control layer of the second distributed unit, configuration information of a radio link control layer of the second distributed unit, and configuration information of a packet data convergence protocol layer of the second central unit.

With reference to the eighth aspect, in some implementations of the eighth aspect, the transceiver module is further configured to send, to the second central unit, information for requesting to perform synchronous transmission to the terminal device, where the second central unit corresponds to the second distributed unit; and the first central unit receives, from the second central unit, information indicating that the request for performing synchronous transmission to the terminal device is accepted.

With reference to the eighth aspect, in some implementations of the eighth aspect, the processing module is further configured to determine the second central unit based on one or more of the following: a measurement result of a signal of the second central unit; a transmission delay between the apparatus and the second central unit; and a distance between the apparatus and the second central unit.

With reference to the eighth aspect, in some implementations of the eighth aspect, the time information indicates one or more of the following: time for processing the data at the packet data convergence protocol layer; time for processing the data at the radio link control layer; time for processing the data at the media access control layer; and time for sending the data to the terminal device.

According to a ninth aspect, a data transmission apparatus is provided. The apparatus includes: a transceiver module, configured to: receive information about cached data from a first distributed unit; and separately send indication information to the first distributed unit and a second distributed unit, where the indication information is determined based on the information about the cached data, and the indication information indicates data synchronously transmitted by the first distributed unit and the second distributed unit to the terminal device.

With reference to the ninth aspect, in some implementations of the ninth aspect, the transceiver module is further configured to receive information about cached data from the second distributed unit; and the processing module is configured to determine the indication information when determining, based on the cached data in the first distributed unit and the cached data in the second distributed unit, that synchronous transmission can be performed.

With reference to the ninth aspect, in some implementations of the ninth aspect, the transceiver module is further configured to receive information about cached data from the second distributed unit; and the transceiver module is further configured to send a notification message to the first distributed unit and/or the second distributed unit when determining, based on the cached data in the first distributed unit and the cached data in the second distributed unit, that synchronous transmission cannot be performed, where the notification message is for notifying that the cached data in the first distributed unit and the cached data in the second distributed unit cannot be synchronously transmitted.

With reference to the ninth aspect, in some implementations of the ninth aspect, the information about the cached data includes one or more of the following: a sequence number of the cached data, an amount of cached data, and a size of the cached data.

With reference to the ninth aspect, in some implementations of the ninth aspect, the transceiver module is further configured to receive identification information of the second distributed unit from the first distributed unit, where the second distributed unit is configured to perform synchronous transmission with the first distributed unit to the terminal device.

With reference to the ninth aspect, in some implementations of the ninth aspect, the indication information indicates one or more of the following: a sequence number of synchronously transmitted data; a size of the synchronously transmitted data; and a processing window of the synchronously transmitted data at a radio link control layer.

With reference to the ninth aspect, in some implementations of the ninth aspect, the transceiver module is further configured to separately send time information to the first distributed unit and the second distributed unit, where the time information indicates time for sending the data to the terminal device.

According to a tenth aspect, a data transmission apparatus is provided. The apparatus includes: a transceiver module, configured to receive data from a first central unit, and time information used by a first distributed unit and a second distributed unit to synchronously transmit the data; and a processing module, configured to send the data to a terminal device based on the time information.

With reference to the tenth aspect, in some implementations of the tenth aspect, the processing module is further configured to retransmit the data through the transceiver module when determining that the data fails to be sent.

With reference to the tenth aspect, in some implementations of the tenth aspect, the transceiver module is further configured to send, to the second distributed unit, information indicating that the data fails to be sent.

With reference to the tenth aspect, in some implementations of the tenth aspect, the transceiver module is specifically configured to: when determining that the data fails to be sent, retransmit, by the first distributed unit, the data at a next available moment of a moment that corresponds to a hybrid automatic repeat request process number and at which the data is sent.

With reference to the tenth aspect, in some implementations of the tenth aspect, the processing module is specifically configured to: when the transceiver module receives a first feedback message from the terminal device, determine that the data fails to be sent, where the first feedback message indicates that the terminal device fails to receive the data; or the processing module is specifically configured to: when the transceiver module does not receive a second feedback message from the terminal device, determine that the data fails to be sent, where the second feedback message indicates that the terminal device successfully receives the data.

With reference to the tenth aspect, in some implementations of the tenth aspect, the time information indicates one or more of the following: time for processing the data at a packet data convergence protocol layer; time for processing the data at a radio link control layer; time for processing the data at a media access control layer; and time for sending the data to the terminal device.

With reference to the tenth aspect, in some implementations of the tenth aspect, the transceiver module is further configured to send information about cached data to the first central unit, where the information about the cached data is for determining the time information.

According to an eleventh aspect, a communication apparatus is provided. The apparatus includes: a transceiver module, configured to: receive data from a user plane function network element and time information corresponding to the data; and send the data and the time information to a first distributed unit, where the time information is used by the first distributed unit and a second distributed unit to synchronously transmit the data.

With reference to the eleventh aspect, in some implementations of the eleventh aspect, the apparatus further includes a processing module. The processing module is configured to send, to a second central unit through the transceiver module based on first configuration information used for communication between the first distributed unit and the terminal device, second configuration information used for communication between the second distributed unit and the terminal device, where the second central unit corresponds to the second distributed unit.

With reference to the eleventh aspect, in some implementations of the eleventh aspect, the first configuration information includes one or more of the following information: channel configuration information of a physical layer of the first distributed unit, configuration information of a media access control layer of the first distributed unit, configuration information of a radio link control layer of the first distributed unit, and configuration information of a packet data convergence protocol layer of the first central unit.

With reference to the eleventh aspect, in some implementations of the eleventh aspect, the transceiver module is further configured to send, to the second central unit, information for requesting to perform synchronous transmission to the terminal device, where the second central unit corresponds to the second distributed unit; and the first central unit receives, from the second central unit, information indicating that the request for performing synchronous transmission to the terminal device is accepted.

With reference to the eleventh aspect, in some implementations of the eleventh aspect, the processing module is further configured to determine the second central unit based on one or more of the following: a measurement result of a signal of the second central unit; a transmission delay between the first central unit and the second central unit; and a distance between the first central unit and the second central unit.

With reference to the eleventh aspect, in some implementations of the eleventh aspect, the transceiver module is further configured to send information about cached data in the first distributed unit to the user plane function network element, where the information about the cached data is for determining the time information.

With reference to the eleventh aspect, in some implementations of the eleventh aspect, the time information indicates one or more of the following: time for processing the data at a packet data convergence protocol layer; time for processing the data at a radio link control layer; time for processing the data at a media access control layer; and time for sending the data to the terminal device.

According to a twelfth aspect, a data transmission apparatus is provided. The apparatus includes: a transceiver module, configured to receive indication information from a terminal device, where the indication information indicates information about data that is synchronously transmitted by a first distributed unit and a second distributed unit to the terminal device, where the transceiver module is further configured to send the data to a terminal device based on the indication information.

With reference to the twelfth aspect, in some implementations of the twelfth aspect, the transceiver module is further configured to send information about cached data to the terminal device, where the information about the cached data is for determining the indication information.

With reference to the twelfth aspect, in some implementations of the twelfth aspect, the information about the cached data includes one or more of the following: a sequence number of the cached data, an amount of cached data, and a size of the cached data.

With reference to the twelfth aspect, in some implementations of the twelfth aspect, the transceiver module is further configured to send identification information of the second distributed unit to the terminal device, where the second distributed unit is configured to perform synchronous transmission with the first distributed unit to the terminal device.

With reference to the twelfth aspect, in some implementations of the twelfth aspect, the indication information indicates one or more of the following: a sequence number of synchronously transmitted data; a size of the synchronously transmitted data; and a processing window of the synchronously transmitted data at a radio link control layer.

With reference to the twelfth aspect, in some implementations of the twelfth aspect, the transceiver module is further configured to receive time information from the terminal device, where the time information indicates time for sending the data to the terminal device; and the transceiver module is specifically configured to send the data to the terminal device at the time indicated by the time information.

According to a thirteenth aspect, a communication apparatus is provided. The apparatus includes: a processing module, configured to determine time information used by a first distributed unit and a second distributed unit to synchronously transmit data; and a transceiver module, configured to send the data and the time information to a first central unit, where the first central unit corresponds to the first distributed unit.

With reference to the thirteenth aspect, in some implementations of the thirteenth aspect, the transceiver module is further configured to send the data and the time information to a second central unit, where the second central unit corresponds to the second distributed unit.

With reference to the thirteenth aspect, in some implementations of the thirteenth aspect, the processing module is specifically configured to determine the time information based on one or more of the following information: information about cached data in the first distributed unit, information about cached data in the second distributed unit, a transmission delay between the first central unit and the first distributed unit, a transmission delay between the second central unit and the second distributed unit, duration for processing the data by the first central unit and/or duration for processing the data by the first distributed unit, duration for processing the data by the second central unit and/or duration for processing the data by the second distributed unit, duration for duplicating and processing the data by the user plane function network element, a transmission delay between the user plane function network element and the first central unit, and a transmission delay between the user plane function network element and the second central unit.

With reference to the thirteenth aspect, in some implementations of the thirteenth aspect, the time information indicates one or more of the following: time for processing the data at a packet data convergence protocol layer; time for processing the data at a radio link control layer; time for processing the data at a media access control layer; and time for sending the data to the terminal device.

According to a fourteenth aspect, a communication apparatus is provided. The apparatus is configured to perform any method according to the first aspect to the seventh aspect. Specifically, the apparatus may include units and/or modules configured to perform the methods according to the first aspect to the seventh aspect, for example, a processing module and/or a transceiver module (which may also be referred to as a communication module).

In an implementation, the apparatus is a network device. For example, the apparatus is a central unit or a distributed unit in an access network device. When the apparatus is the network device, the communication module may be a transceiver or an input/output interface, and the processing module may be a processor.

For example, the apparatus is a chip, a chip system, or a circuit for the central unit. When the apparatus is a chip, a chip system, or a circuit for the central unit, the transceiver module may be an input/output interface, an interface circuit, an output circuit, an input circuit, a pin, a related circuit, or the like on the chip, the chip system, or the circuit, and the processing module may be a processor, a processing circuit, a logic circuit, or the like.

In a possible case, the apparatus is a central unit or a chip, a chip system, or a circuit in the central unit. In this case, the apparatus may include units and/or modules configured to perform the method according to the first aspect, the second aspect, the fifth aspect, or the sixth aspect, for example, a processing module and/or a transceiver module.

For another example, the apparatus is a chip, a chip system, or a circuit for the distributed unit. When the apparatus is a chip, a chip system, or a circuit for the distributed unit, the transceiver module may be an input/output interface, an interface circuit, an output circuit, an input circuit, a pin, a related circuit, or the like on the chip, the chip system, or the circuit, and the processing module may be a processor, a processing circuit, a logic circuit, or the like.

In a possible case, the apparatus is a distributed unit or a chip, a chip system, or a circuit in the central unit. In this case, the apparatus may include units and/or modules configured to perform the method according to the fourth aspect, for example, a processing module and/or a transceiver module.

In another implementation, the apparatus is a user plane function network element. When the apparatus is a user plane function network element, the communication module may be a transceiver or an input/output interface, and the processing module may be a processor.

For example, the apparatus is a chip, a chip system, or a circuit for the user plane function network element. When the apparatus is a chip, a chip system, or a circuit for the user plane function network element, the transceiver module may be an input/output interface, an interface circuit, an output circuit, an input circuit, a pin, a related circuit, or the like on the chip, the chip system, or the circuit, and the processing module may be a processor, a processing circuit, a logic circuit, or the like.

In a possible case, the apparatus is a user plane function network element or a chip, a chip system, or a circuit in the user plane function network element. In this case, the apparatus may include units and/or modules configured to perform the method according to the seventh aspect, for example, a processing module and/or a transceiver module.

In another implementation, the apparatus is a terminal device. When the apparatus is the terminal device, the communication unit may be a transceiver or an input/output interface, and the processing unit may be a processor.

In a possible case, the apparatus is a terminal device or a chip, a chip system, or a circuit in the terminal device. In this case, the apparatus may include units and/or modules configured to perform the method according to the third aspect, for example, a processing module and/or a transceiver module.

Optionally, the transceiver may be a transceiver circuit. Optionally, the input/output interface may be an input/output circuit.

Optionally, the transceiver may be a transceiver circuit. Optionally, the input/output interface may be an input/output circuit.

According to a fifteenth aspect, a communication apparatus is provided. The apparatus includes: a memory, configured to store a program; and a processor, configured to execute the program stored in the memory. When the program stored in the memory is executed, the processor is configured to perform any method according to the first aspect to the seventh aspect.

According to a sixteenth aspect, this application provides a processor, configured to perform the methods according to the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the foregoing information, the processor outputs the foregoing information to a transceiver, so that the transceiver transmits the foregoing information. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information and then the foregoing information is input into the processor.

Based on the foregoing principle, for example, receiving the request message in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a seventeenth aspect, a computer-readable storage medium is provided. The computer-readable storage medium stores program code to be executed by a device, and the program code is used to perform any method according to the first aspect to the seventh aspect.

According to an eighteenth aspect, a computer program product including instructions is provided. When the computer program product is run on a computer, the computer is enabled to perform any method according to the first aspect to the seventh aspect.

According to a nineteenth aspect, a chip is provided. The chip includes a processor and a communication interface. The processor reads, through the communication interface, instructions stored in a memory, to perform any method according to the first aspect to the seventh aspect.

Optionally, in an implementation, the chip may further include a memory. The memory stores instructions, and the processor is configured to execute the instructions stored in the memory; and when the instructions are executed, the processor is configured to perform any method according to the first aspect to the seventh aspect.

According to a twentieth aspect, an access network device is provided. The access network device includes the central unit according to any one of the first aspect, the second aspect, the fifth aspect, and the sixth aspect, and the distributed unit according to the fourth aspect.

According to a twenty-first aspect, a communication system is provided. The communication system includes a central unit that performs the method according to the first aspect and a distributed unit that performs the method according to the fourth aspect.

According to a twenty-second aspect, a communication system is provided. The communication system includes a central unit that performs the method according to the second aspect and a distributed unit that performs the method according to the fourth aspect. Optionally, the communication system may further include a user plane function network element that performs the method according to the seventh aspect.

According to a twenty-third aspect, a communication system is provided. The communication system includes a central unit that performs the method according to the sixth aspect and a terminal device that performs the method according to the second aspect.

### BRIEF DESCRIPTION OF DRAWINGS

FIG. 1 is a diagram of a communication system to which an embodiment of this application is applied;
FIG. 2 is a diagram of a base station to which an embodiment of this application is applied;
FIG. 3 is a schematic flowchart of coordinated transmission;
FIG. 4 is a diagram of a method 400 according to an embodiment of this application;
FIG. 5 is a possible flowchart corresponding to a method 400 according to an embodiment of this application;
FIG. 6 is a diagram of a method 600 according to an embodiment of this application;
FIG. 7 is a possible flowchart corresponding to a method 600 according to an embodiment of this application;
FIG. 8 is a diagram of a method 800 according to an embodiment of this application;
FIG. 9 is a possible flowchart corresponding to a method 800 according to an embodiment of this application;
FIG. 10 is a diagram of a method 1000 according to an embodiment of this application;
FIG. 11 is a possible flowchart corresponding to a method 1000 according to an embodiment of this application;
FIG. 12 is a block diagram of a communication apparatus according to an embodiment of this application;
FIG. 13 is a block diagram of a communication apparatus according to another embodiment of this application; and
FIG. 14 is a block diagram of a communication apparatus according to still another embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In descriptions of this application, unless otherwise specified, a plurality of means two or more than two.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numerals in this application are merely used for distinguishing for ease of description, and are not used to limit the scope of this application. Sequence numbers of the foregoing processes do not mean an execution sequence, and the execution sequence of the processes should be determined based on functions and internal logic of the processes.

In this specification, the claims, and the accompanying drawings of this application, the terms "first", "second", "third", "fourth", and various other ordinal number terms (if existent) are intended to distinguish between similar objects, but do not necessarily indicate a specific order or sequence. It should be understood that the data used in such a way is interchangeable in proper circumstances so that embodiments described herein can be implemented in an order other than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The technical solutions of embodiments of this application may be applied to various communication systems, for example, but not limited to, a narrowband internet of things (narrowband internet of things, NB-IoT) system, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a future 6th generation communication system.

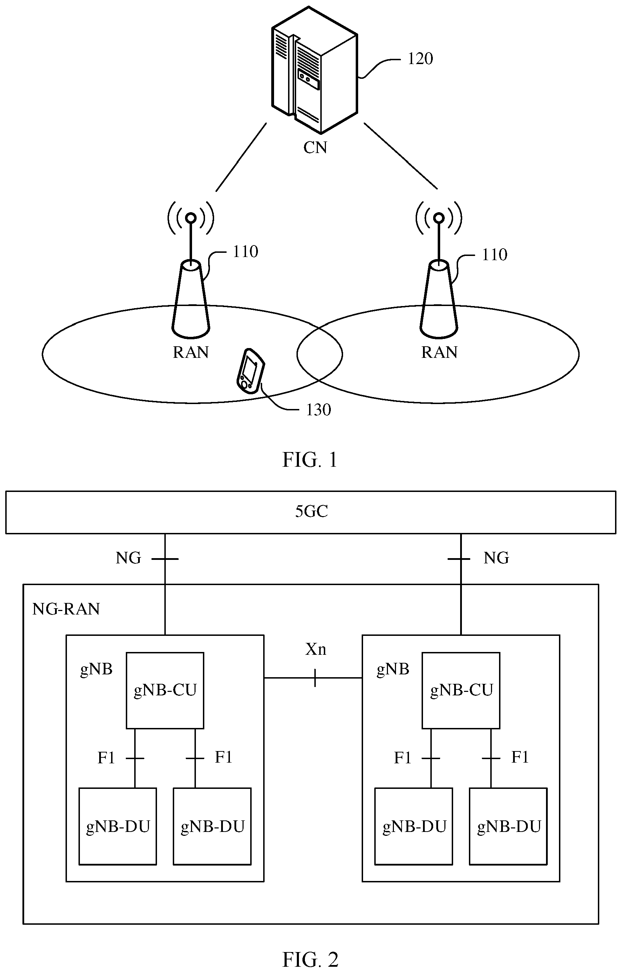

For ease of understanding of embodiments of this application, a communication system to which embodiments of this application are applicable is first described in detail with reference to FIG. 1.

FIG. 1 is a diagram of a communication system 100 to which an embodiment of this application is applicable. As shown in FIG. 1, a terminal 130 accesses a wireless network, to obtain a service from an external network (for example, the internet) through the wireless network, or communicate with another terminal through the wireless network. The wireless network includes a network device 110 and a core network (core network, CN) 120. The network device 110 is configured to access the terminal device 130 to the wireless network, and the CN 120 is configured to manage the terminal and provide a gateway for communicating with the external network.

The terminal device is also referred to as user equipment (user equipment, UE), a mobile station (mobile station, MS), a mobile terminal (mobile terminal, MT), or the like, and is a device that provides voice/data connectivity for a user, for example, a handheld device or a vehicle-mounted device that has a wireless connection function. Currently, some examples of the terminal are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The network device is a device in a wireless network, for example, a radio access network (radio access network, RAN) node that accesses a terminal to the wireless network. Currently, some examples of the RAN node are as follows: a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In a network structure, the network device may include a central unit (central unit, CU) node, a distributed unit (distributed unit, DU) node, or a RAN device including a CU node and a DU node.

FIG. 2 is a diagram of a base station to which an embodiment of this application is applied. As shown in FIG. 2, the base station may include a CU and a DU. To be specific, functions of the base station in an original access network are separated, some functions of the base station are deployed in one CU, and remaining functions are deployed in a DU. A plurality of DUs share one CU. This saves costs, and facilitates network expansion. CU-DU separation may be performed by protocol stacks. In a possible manner, a radio resource control (radio resource control, RRC) layer, a service data adaptation protocol (service data adaptation protocol, SDAP) layer, and a packet data convergence protocol (packet data convergence protocol, PDCP) layer are deployed in the CU, and a radio link control (radio link control, RLC) layer, a media access control (media access control, MAC) layer, and a physical (physical, PHY) layer are deployed in the DU.

In a 5G system, the CU and the DU are connected through an F1 interface, gNBs are connected through an Xn interface to implement information exchange between base stations, and a gNB and a 5G core network are connected through an NG interface to implement information exchange between a base station and a core network. It may be understood that, in some deployment scenarios, when there is no Xn interface between the gNBs, information exchange between the gNBs needs to be completed through information transfer of the core network.

To improve a capacity and reliability of wireless communication, a terminal device may be served by a plurality of network devices at the same time. For example, the terminal device may communicate with a plurality of TRPs located in different geographical locations. The plurality of TRPs may be a plurality of physical antennas belonging to one base station, or may be a plurality of physical antennas belonging to different base stations. These TRPs need to coordinate to jointly serve the terminal device.

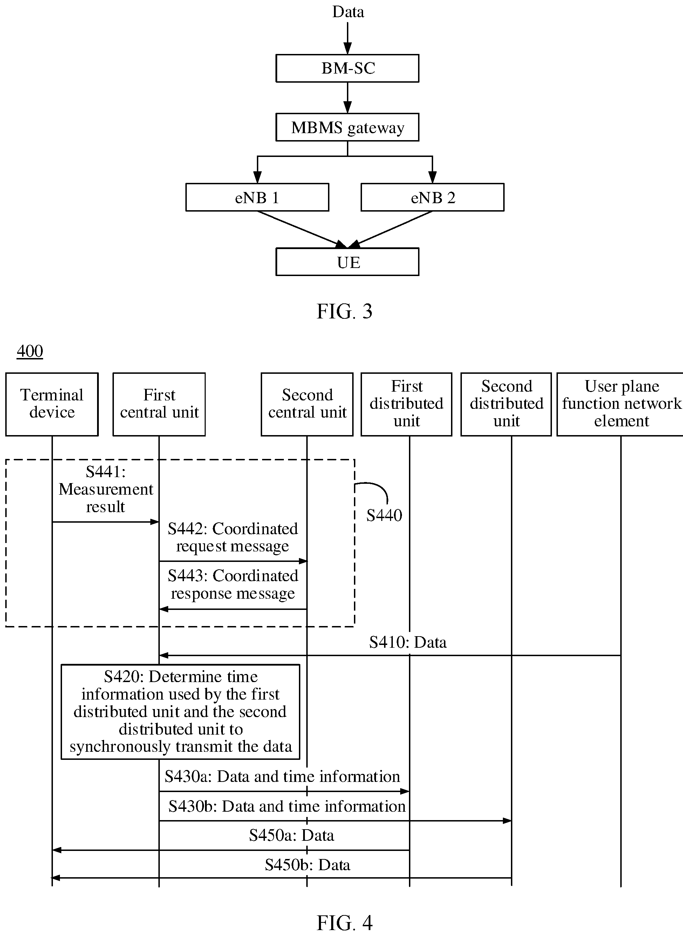

In some multi-TRP coordination manners, same data content needs to be sent from a plurality of TRPs to UE at a same moment. In a 4G LTE communication system, a multicast broadcast single frequency network (multicast broadcast single frequency network, MBSFN) technology is introduced. In the technology, data from an application service is processed by a broadcast multicast service center (broadcast multicast service center, BM-SC), and then duplicated and distributed to a plurality of 4G base stations eNBs by a multicast broadcast multimedia service (multicast broadcast multimedia service, MBMS) gateway. A specific procedure is shown in FIG. 3.

A protocol stack of the BM-SC has a function of a synchronization (SYNC) protocol. The function adds a SYNC header to each downlink packet, the SYNC header includes a timestamp, number information of the packet, and statistical information, the timestamp indicates a moment at which the base station schedules/sends the downlink packet to the UE, and the number information of the packet and the statistical information are used by the eNB to identify whether a packet loss occurs and a quantity of lost packets. The timestamp in the SYNC header is used, so that the plurality of eNBs may send data to the UE at a same moment, thereby implementing coordinated transmission.

However, in the foregoing MBSFN technology, in addition to the eNB that performs coordinated transmission, an additional BM-SC and an additional MBMS gateway need to be introduced to process and distribute the packet. Consequently, the system is complex, and data transmission reliability is also affected. In view of this, an embodiment of this application provides a data transmission method that can be applied to an architecture in which a central unit and a distributed unit are separated, so that different distributed units can implement synchronous transmission.

It should be understood that, in this application, different forms may be used for information transmission between different network nodes. This is not limited in this application. In a possible form, a first network node directly sends information to a second network node (where for example, there is a direct link between the first network node and the second network node). In another possible form, a first network node forwards information to a second network node through an intermediate node (where for example, there is a routing node between the first network node and the second network node, and the routing node forwards, to the second network node, the information sent by the first network node to the second network node). The first network node and the second network node may be, for example, any two nodes in a first central unit, a second central unit, a first distributed unit, and a second distributed unit in embodiments of this application.

That is, in this application, that the first network node sends the information to the second network node may be that the first network node directly sends the information to the second network node, or the first network node sends the information to the second network node through the intermediate node. Correspondingly, that the first network node receives the information from the second network node may be that the first network node directly receives the information from the second network node, or the first network node receives the information from the second network node through the intermediate node.

FIG. 4 is an example flowchart of a method 400 according to an embodiment of this application. In the method 400, a first central unit determines time information corresponding to data, and sends the data and the time information to a first distributed unit and a second distributed unit that perform synchronous transmission on the data, and the first distributed unit and the second distributed unit synchronously send the data to a terminal device based on the time information.

The following describes the method 400 by using an example with reference to steps in FIG. 4.

S410: A user plane function network element sends the data to the first central unit. Correspondingly, the first central unit receives the data from the user plane function network element. A specific manner is not limited in this application.

S420: The first central unit determines the time information used by the first distributed unit and the second distributed unit to synchronously transmit the data.

For example, after the first central unit receives the data from the user plane function network element, if the first central unit determines that the data needs to be sent to the terminal device in a coordinated transmission manner, the first central unit determines the time information corresponding to the data, and the time information is used by different stations to synchronously transmit the data to the terminal device. For example, the first central unit preconfigures (or determines through negotiation) an association relationship between a plurality of stations and an identifier of the terminal device, and the association relationship indicates that the plurality of stations coordinate to transmit the data to the terminal device. After the first central unit receives the data from the user plane function network element, if the data is sent to the terminal device (that is, a destination address of the data points to the terminal device), the first central unit determines the time information corresponding to the data.

It may be understood that a name of the time information is merely an example. In different scenarios, the time information may also be referred to as a timestamp, timestamp information, indication information, or the like. This is not limited in this application. It may be further understood that the time information may be a newly added information element, or may be a specific existing information element. For example, the time information may be a packet data convergence protocol sequence number of the data. For details, refer to descriptions of the time information after step S443. Details are not described herein.

That the data is sent to the terminal device in a coordinated transmission manner means that a plurality of different stations that provide services for the terminal device send same data content to the terminal device at a same moment (or within an allowed time difference range). Therefore, coordinated transmission may also be referred to as synchronous transmission, and this is not distinguished in this application.

In this embodiment of this application, an example in which the first distributed unit and the second distributed unit are stations that perform synchronous transmission to the terminal device is used for description. It may be understood that this embodiment of this application is also applicable to a case in which there are three or more stations. Therefore, in the example provided in this application, the first central unit determines the time information, and the time information is used by the first distributed unit and the second distributed unit to synchronously transmit the data. That the time information is used by the first distributed unit and the second distributed unit to synchronously transmit the data means that the first distributed unit and the second distributed unit may synchronously send the data to the terminal device based on the time information, or an error between time at which the first distributed unit sends the data to the terminal device based on the time information and time at which the second distributed unit sends the data to the terminal device based on the time information is within an allowed range.

For example, the time information indicates one or more of the following: time for processing the data at a radio link control layer; time for processing the data at a media access control layer; and time for sending the data at a physical layer.

It may be understood that the time for processing the data at the radio link control layer may be a moment at which processing performed on the data at the radio link control layer starts, or may be a moment at which processing performed on the data at the radio link control layer ends, or may be a time period for processing the data at the radio link control layer. The time for processing the data at the media access control layer may also be explained in a similar manner, and details are not described again.

The following describes an example of a specific implementation in which the first central unit determines the time information.

For example, the first central unit may determine, based on one or more of the following information, the time information corresponding to the data:
a size of cached data in the first distributed unit, a size of cached data in the second distributed unit, a transmission delay between the first central unit and the first distributed unit, a transmission delay between the first central unit and the second distributed unit, duration for processing the packet by the first distributed unit, duration for processing the packet by the second distributed unit, duration for duplicating and processing the data by the first central unit, a transmission delay between the first distributed unit and the terminal device, a transmission delay between the second distributed unit and the terminal device, and indication information from the first distributed unit and/or the second distributed unit, where the indication information is used to adjust the time information.

It may be understood that, when the first central unit and the second distributed unit belong to a same access network device, the transmission delay between the first central unit and the second distributed unit is a transmission delay when the first central unit and the second distributed unit directly communicate with each other; or when the first central unit and a second central unit belong to different access network devices, the transmission delay between the first central unit and the second distributed unit is a transmission delay between the first central unit and the second central unit (where the second central unit corresponds to the second distributed unit) and a transmission delay between the second central unit and the second distributed unit.

For example, the first central unit obtains the transmission delay (denoted as a first delay) between the first central unit and the first distributed unit and the transmission delay (denoted as a second delay) between the first central unit and the second distributed unit, and then determines the time information based on the first delay and the second delay, where the time information indicates processing time of a packet at the radio link control layer, a difference between the time indicated by the time information and current time (where the current time may be time at which the first central unit generates the time information, or time at which the time information is added to a header of the packet carrying the data, or time at which the time information is sent) needs to be greater than or equal to a larger value of the first delay and the second delay. In a possible implementation, the first central unit obtains the first delay in a manner of sending a delay detection packet to the first distributed unit. For example, the first central unit sends the delay detection packet to the first distributed unit at a moment T 1, and adds information about the moment T1 to the delay detection data packet, and the first distributed unit receives the delay detection packet at a moment T2, calculates a difference (namely, the first delay) between T2 and T1, and notifies the first central unit of the difference. The first central unit may obtain the second delay in a similar manner, and details are not described herein again.

For another example, the first central unit obtains the transmission delay (denoted as a third delay) between the first distributed unit and the terminal device and the transmission delay (denoted as a fourth delay) between the second distributed unit and the terminal device, and then determines the time information based on the third delay and the fourth delay, where the time information indicates processing time of a packet at the radio link control layer, and a difference between the time indicated by the time information and current time needs to be greater than or equal to a larger value of the third delay and the fourth delay. In a possible implementation, the first central unit may separately request the first distributed unit and the second distributed unit to obtain the third delay and the fourth delay. The first distributed unit is used as an example. The first central unit sends a request message to the first distributed unit, to request to obtain the transmission delay between the first distributed unit and the terminal device. The first distributed unit may obtain the third delay in a manner of sending a delay detection packet to the terminal device (for a specific manner, refer to the manner in which the first central unit obtains the first delay in the foregoing example), and then the first distributed unit sends the third delay to the first central unit. It may be understood that the first central unit may obtain the third delay and the fourth delay in advance before receiving the data from the user plane function network element, to reduce the transmission delay.

For another example, the first central unit determines the time information based on the size of the cached data in the first distributed unit. Specifically, for example, the first central unit obtains the size of the cached data from the first distributed unit. When the size of the cached data is greater than a threshold #1, a difference between the time indicated by the time information determined by the first central unit and current time needs to be greater than a threshold #2; or when the first central unit estimates, based on the size of the cached data, duration for processing the cached data by the first distributed unit, a difference between the time indicated by the time information determined by the first central unit and current time is greater than or equal to the duration. In other words, when an amount of the currently cached data in the first central unit is large, the first central unit needs to reserve a large time difference when determining the time information. That is, a difference between the time indicated by the time information and the current time needs to be large. It may be understood that the first distributed unit may periodically notify the first central unit of information about the cached data, or may send information about the cached data to the first central unit based on the request of the first central unit.

For another example, the first central unit may further adjust the time information based on the indication information from the first distributed unit and/or the indication information from the second distributed unit. Specifically, for example, the second distributed unit receives the data and the time information from the first central unit, where the time information indicates the time for sending the data to the terminal device. However, the second distributed unit currently caches a large amount of data, and cannot send the data based on the time indicated by the time information. In this case, the second distributed unit sends the indication information to the first central unit, where the indication information indicates to increase a time difference between time for sending the time information and the time indicated by the time information, or the indication information indicates that the second distributed unit cannot send the data based on the time indicated by the time information, or the time information may be information about the cached data in the second distributed unit, or the like. After receiving the indication information from the second distributed unit, the first central unit adjusts the time information based on the indication information. For example, the first central unit increases a time difference between the time indicated by the time information and the current time.

It may be understood that, when both the second distributed unit and the first central unit belong to a same access network device, for example, both the second distributed unit and the first central unit belong to a first access network device, the first central unit may directly receive the indication information from the second distributed unit; or when the second distributed unit and the first central unit belong to different access network devices, for example, the second distributed unit belongs to a second access network device, and the first central unit belongs to a first access network device, the second distributed unit may send the indication information to the second central unit of the second access network device, and then the second central unit sends the indication information to the first access network device.

S430a: The first central unit sends the data and the time information to the first distributed unit.

S430b: The first central unit sends the data and the time information to the second distributed unit.

For example, after determining the time information, the first central unit sends, to the first distributed unit, the time information and the data corresponding to the time information, and sends, to the second distributed unit, the time information and the data corresponding to the time information.

It may be understood that the first central unit, the first distributed unit, and the second distributed unit may belong to a same access network device, or may belong to different access network devices. For example, the first central unit and the first distributed unit belong to the first access network device, and the second distributed unit belongs to the second access network device. For another example, the first central unit, the first distributed unit, and the second distributed unit all belong to the first access network device. It should be understood that the first access network device and the second access network device in the foregoing example are different access network devices.

When the first distributed unit and the second distributed unit belong to the first access network device, and the second distributed unit belongs to the second access network device, the first central unit may forward the data and the time information to the second distributed unit through another node. For example, the first central unit sends the data and the time information to the second central unit, and then the second central unit forwards the data and the time information to the second distributed unit. The second central unit belongs to the second access network device, that is, the second central unit corresponds to the second distributed unit. In addition, in this scenario, the first access network device and the second access network device may perform a negotiation procedure of coordinated transmission before S410. A specific process is shown in S440. The following describes the negotiation procedure by using an example with reference to steps in S440.

S441: The terminal device sends a measurement result to the first central unit. Correspondingly, the first central unit receives the measurement result from the terminal device.

For example, the terminal device measures a reference signal of a current serving cell and/or a reference signal of a neighboring cell to obtain a measurement result, and sends the measurement result to the first central unit. It may be understood that the first central unit belongs to a network device (namely, the first access network device) corresponding to the current serving cell of the terminal device.

After receiving the measurement result from the terminal device, the first central unit determines, based on the measurement result (optionally, may further include other information), a station that performs coordinated transmission.

For example, the first central unit determines, based on one or more of the following, that the second central unit (or an access network device in which the second central unit is located) is a station that performs coordinated transmission:
a measurement result of a signal of the second central unit;
a transmission delay between the second central unit and the first central unit; and
a distance between the second central unit and the first central unit.

Specifically, for example, when the measurement result of the second central unit (or the access network device in which the second central unit is located) meets one or more of the following conditions, the first central unit selects the second central unit to perform coordinated transmission:
(1) signal strength is greater than a threshold #3;
(2) the signal strength is the strongest in all measurement results;
(3) the transmission delay between the second central unit and the first central unit is less than a threshold #4;
(4) the transmission delay between the second central unit and the first central unit is the lowest in all the measurement results; and
(5) the distance between the second central unit and the first central unit or a distance between the second central unit and the terminal device is less than a threshold #5.

It may be understood that the first central unit may determine one or more stations that perform coordinated transmission. This is not limited in this application.

S442: The first central unit sends a coordinated request message to the second central unit. Correspondingly, the second central unit receives the coordinated request message from the first central unit.

For example, after determining to perform coordinated transmission with the second central unit, the first central unit sends a coordinated transmission request message to the second central unit. Optionally, the coordinated transmission request message includes information for requesting to perform synchronous transmission to the terminal device.

It may be understood that the first central unit may send the coordinated request information to the plurality of stations suitable for coordinated transmission, that is, the first central unit may request two or more stations to perform coordinated transmission. This is not limited in this application.

Optionally, the first central unit may further send, to the second central unit based on first configuration information used for communication between the first distributed unit and the terminal device, second configuration information used for communication between the second distributed unit and the terminal device. The second configuration information is the same as the first configuration information, or the second configuration information is information determined based on the first configuration information.

It may be understood that the first central unit sends the second configuration information to the second central unit, so that a configuration for communication between the first distributed unit and the terminal device is consistent with a configuration for communication between the second distributed unit and the terminal device. In other words, the second configuration information is sent to the second central unit, so that the first distributed unit and the second distributed unit can coordinate to send transmitted data to the terminal device by using same configuration information and/or same scheduling control information. For a specific example, refer to descriptions of the part S450a and S450b. Details are not described herein.

For example, the first configuration information includes one or more of the following information: channel configuration information of a physical layer of the first distributed unit, configuration information of a media access control layer of the first distributed unit, configuration information of a radio link control layer of the first distributed unit, and configuration information of a packet data convergence protocol layer of the first central unit. For example, the first configuration information includes one or more of the following information: identity information of the terminal device, for example, a cell radio network temporary identifier (cell radio network temporary identifier, C-RNTI), time-frequency resource information for communication between the first access network device and the terminal device, radio bearer (radio bearer, RB) information allocated by the first access network device to the terminal device, system frame synchronization information and uplink and downlink slot allocation proportion information of the first access network device, and a quantity of hybrid automatic repeat request processes and/or hybrid automatic repeat request process numbers used by the first access network device. It should be understood that, when the first access network device includes the first central unit and the first distributed unit, configuration information used for communication between the first central unit and the terminal device and configuration information used for communication between the first distributed unit and the terminal device may also be described as configuration information used for communication between the first access network device and the terminal device.

Optionally, the first configuration information may further include another type of information. For example, the first configuration information includes control information for scheduling the terminal device by the first access network device, for example, a scheduling priority and proportion fair (Proportion Fair) scheduling information. The proportional fair scheduling information is a scheduling algorithm input parameter of the first access network device, and is used by the first access network device to schedule different terminal devices in a fair manner.

Similarly, the second configuration information includes one or more of the following information: channel configuration information of a physical layer of the second distributed unit, configuration information of a media access control layer of the second distributed unit, configuration information of a radio link control layer of the second distributed unit, configuration information of a packet data convergence protocol layer of the second central unit, identification information of the terminal device, and the like. For details, refer to the foregoing descriptions of the first configuration information. Details are not described herein again.

S443: The second central unit sends a coordinated response message to the first central unit. Correspondingly, the first central unit receives the coordinated response message from the second central unit.

For example, after receiving the coordinated request message from the first central unit, the second central unit determines whether the second access network device supports coordinated transmission with the first access network device. When the coordinated transmission is supported, the second central unit sends the coordinated response message to the first central unit, where the response message includes information indicating that the request for performing synchronous transmission to the terminal device is accepted (or information indicating that the request for performing coordinated transmission is allowed); or otherwise, the second central unit sends the coordinated response message to the first central unit to reject to perform coordinated transmission.

It may be understood that the first central unit and the second distributed unit may repeatedly perform a process of S442 and S443, to negotiate configuration information for performing coordinated transmission, or after coordinated transmission starts subsequently, the first central unit and the second central unit may still exchange some information through the procedure of S442 and S443. For example, when a plurality of types of information listed in S442 are changed or modified, or the control information for scheduling the terminal device is changed, the first central unit and the second central unit may perform information/configuration synchronization through the foregoing negotiation procedure.

It may be understood that the first central unit may select all stations that are indicated to be allowed to perform coordinated transmission to perform coordinated transmission, or may select one or more stations from stations that are indicated to be allowed to perform coordinated transmission to perform coordinated transmission. This is not limited in this application.

The following describes an example of a specific manner in which the first central unit sends the data and the time information to the first distributed unit, and sends the data and the time information to the second distributed unit.

In an implementation, the first central unit may include the time information in a packet data convergence protocol header. In this implementation, the first central unit encrypts the data at the packet data convergence protocol layer to obtain encrypted data; adds the time information to the packet data convergence protocol header of the packet carrying the encrypted data; and then duplicates the packet to which the time information is added, and separately sends the packet to the first distributed unit and the second distributed unit, where the packet data convergence protocol header of the packet carries the time information. It may be understood that, in this implementation, the time information may be a newly added information element, or may be an existing information element. For example, the time information may be a packet data convergence protocol sequence number, for example, a PDCP SN. In this case, a correspondence between different packet data convergence protocol sequence numbers and different time may be preconfigured in the first distributed unit and the second distributed unit, so that the first distributed unit and the second distributed unit may determine, by using the packet data convergence protocol sequence number, time for sending/processing the data.

In another implementation, the first central unit may include the time information in a header of a tunnel carrying the data. For example, the first central unit may include the time information in a general packet radio service tunneling protocol-user plane (general packet radio service tunneling protocol for the user plane, GTP-U) protocol data unit (protocol data unit, PDU) header carrying the data. In this implementation, the first central unit first duplicates the data, separately processes, by using a tunneling protocol (for example, a GTP-U protocol), two pieces of data obtained through duplication, and then separately sends the data to the first distributed unit and the second distributed unit through the tunnel, and the header of the tunnel includes the time information.

The first central unit may generate time information for each piece of data used for performing coordinated transmission. In this case, after receiving the data from the first central unit, the first distributed unit or the second distributed unit processes the data or sends the data based on the time information corresponding to the data, that is, the first distributed unit and the second distributed unit synchronously send the data based on the time information corresponding to the data. It may be understood that, unless otherwise specified, the data in embodiments of this application is data used for performing coordinated transmission, and details are not described again subsequently.

Alternatively, in another implementation, the first central unit may generate time information for the 1^{st} piece of data used for performing coordinated transmission. In other words, the first central unit may not generate time information for subsequently continuously sent data. In this case, the first distributed unit or the second distributed unit synchronously sends, based on the time information, the 1^{st} piece of data used for performing coordinated transmission, and may subsequently sequentially process/send remaining data.

Alternatively, in still another implementation, the first central unit may generate time information for some data based on a specific periodicity. For example, the first central unit generates the time information based on a specific time periodicity. Specifically, for example, the first central unit generates time information for next one (or more) pieces of to-be-transmitted data at an interval of 10 ms. For another example, the first central unit generates time information based on a specific quantity periodicity. Specifically, for example, each time the first central unit transmits 10 pieces of data, the first central unit generates time information for next one (or more) pieces of to-be-transmitted data. In this case, after the first distributed unit and the second distributed unit receive the data from the first central unit, if the time information corresponding to the data is further received, the first distributed unit and the second distributed unit synchronously send the data based on the time information, then sequentially process/or send remaining packets until the data carrying the time information is received again, and then repeat the foregoing process.

Alternatively, in still another implementation, the first central unit may generate time information for to-be-transmitted data when a specific event is triggered, that is, when a specific trigger condition is met, the first central unit generates the time information for the to-be-transmitted data. For example, when the first central unit receives, from the terminal device, feedback information that indicates that coordinated transmission is not synchronized, the first central unit generates time information for next one (or more) pieces of to-be-transmitted data. For another example, when downlink transmission is resumed after downlink transmission of the first central unit is interrupted, the first central unit generates time information for next one (or more) pieces of to-be-transmitted data.

Alternatively, in still another implementation, the first central unit generates one piece of time information for a cluster of data corresponding to a specific service type. For example, in a specific service type, if a core network device (for example, the user plane function network element) intermittently or periodically sends the cluster of data to the first central unit, the first central unit may generate one piece of time information for the cluster of data, and the first distributed unit and the second distributed unit may sequentially process the cluster of data based on the time information.

S450a: The first distributed unit sends the data to the terminal device based on the time information.

S450b: The second distributed unit sends the data to the terminal device based on the time information.

For example, after receiving the data and the time information from the first central unit, the first distributed unit and the second distributed unit separately send the data to the terminal device based on the time information. The following uses the first distributed unit as an example for description.

For example, the first distributed unit receives the data and the time information from the first central unit, and the time information indicates the time for processing the data at the radio link control layer. In this case, the first distributed unit processes the data at the radio link control layer based on the time indicated by the time information, and then sends the data to the terminal device after the data is processed at another layer.

For another example, the first distributed unit receives the data and the time information from the first central unit, and the time information indicates the time for processing the data at the media access control layer. In this case, the first distributed unit processes the data at the media access control layer based on the time indicated by the time information, and then sends the data to the terminal device after the data is processed at another layer.

It should be noted that, for the foregoing two examples, if the first distributed unit and the second distributed unit belong to different access network devices, for example, the first distributed unit belongs to the first access network device, and the second distributed unit belongs to the second access network device, before coordinated transmission, the first access network device and the second access network device may negotiate the configuration information used to communicate with the terminal device. For example, the first access network device and the second access network device reuse the procedure of S442 and S443 to negotiate the configuration information, and the configuration information includes the channel configuration information of the physical layer, the configuration information of the media access control layer, the configuration information of the radio link control layer, the configuration information of the packet data convergence protocol layer, and the like. In this case, if the time information indicates the time for processing the data at the radio link control layer (or the media access control layer), the first distributed unit and the second distributed unit may synchronously process the data at the radio link control layer based on the time information. Because the first access network device and the second access network device pre-negotiate same configuration information, the duration for processing the data by the first distributed unit and the duration for processing the data by the second distributed unit may be approximately equal, so that the first distributed unit and the second distributed unit can synchronously send the data to the terminal device.

For another example, the first distributed unit receives the data and the time information from the first central unit, and the time information indicates the time for sending the data at the physical layer. In this case, the first distributed unit sends the data to the terminal device based on the time indicated by the time information.

It may be understood that the first distributed unit may send the time information to the terminal device, or may not send the time information to the terminal device. For example, when the time information is carried in a packet data convergence protocol header of the data, the first distributed unit may delete the time information from the packet data convergence protocol header of the packet carrying the data, and then send the packet to the terminal device. For another example, when the time information is carried in a GTP-U protocol header of the data, the first distributed unit may delete the time information from a GTP-U header of a GTP-U tunnel carrying the data, and then send the packet to the terminal device. It should be understood that, in this application, a packet, of a specific layer of protocol, in which the time information is carried is not limited. The protocol may be a protocol other than a packet data convergence protocol or a GTP-U protocol, or may be some inter-layer interaction indications, for example, cross-layer indication information from the packet data convergence protocol layer to the radio link control layer (or the media access control layer or the physical layer). The cross-layer indication information needs to be deleted before being sent to the terminal device, and does not need to be sent to the terminal device.

Optionally, before sending the data to the terminal device, the first distributed unit and/or the second distributed unit may further adjust the time for sending the data (or the time indicated by the time information), to reduce an error between the time at which the terminal device receives the data from the first distributed unit and the time at which the terminal device receives the data from the second distributed unit, that is, enable the terminal device to receive the data from the first distributed unit and the data from the second distributed unit at the same time as much as possible. For example, in some communication scenarios, if a distance between the first distributed unit and the terminal device and a distance between the second distributed unit and the terminal device are large, even if the first distributed unit and the second distributed unit synchronously send the data to the terminal device, a difference between the time at which the terminal device receives the data from the first distributed unit and the time at which the terminal device receives the data from the second distributed unit may be large. Consequently, efficiency and reliability of coordinated transmission are reduced. In a possible implementation, the terminal device measures a time difference between time at which a downlink signal of the first distributed unit arrives at the terminal device and time at which a downlink signal of the second distributed unit arrives at the terminal device. To be specific, the terminal device measures a time difference between the transmission delay between the first distributed unit and the terminal device and the transmission delay between the second distributed unit and the terminal device. Then, the terminal device sends the time difference to the first distributed unit, and the first distributed unit adjusts, based on the time difference, the time for sending the data to the terminal device (or the time indicated by the time information). For example, the terminal device determines, through measurement, that the time difference is d. To be specific, in a synchronous sending case, a signal of the first distributed unit is received by the terminal device in a time period d earlier than a signal of the second distributed unit. The terminal device notifies the first distributed unit of the time difference d, and the first distributed unit adjusts, based on the time difference d, the time for sending the data. For example, if the time information indicates that the first distributed unit sends the data to the terminal device at a moment T, the first distributed unit sends the data to the terminal device at a moment (T+d) based on the time information and the time difference. It should be understood that in this adjustment manner, the terminal device may not send the time difference to the second distributed unit, that is, the second distributed unit may not adjust the time for sending the data. According to the foregoing solution, the data sent by the first distributed unit and the second distributed unit may arrive at a receive end of the terminal device at a very close moment, so that efficiency and reliability of coordinated transmission can be improved, and interference can be reduced.

Optionally, in some possible implementations, the time information received by the first distributed unit and/or the time information received by the second distributed unit from the first central unit may indicate latest time at which the first distributed unit completes processing at the media access control layer and/or latest time at which the second distributed unit completes processing at the media access control layer. For example, before the time indicated by the time information, the first distributed unit and/or the second distributed unit complete/completes processing of the data at the media access control layer, and store/stores the data corresponding to the time information. After the first distributed unit and/or the second distributed unit receive/receives the indication information from the terminal device (for example, a time difference that is indicated by the terminal device and that is between arrival of the downlink signal of the first distributed unit at the terminal device and arrival of the downlink signal of the second distributed unit at the terminal device, or channel state information that is indicated by the terminal device and that is used by the network device for downlink scheduling reference), the first distributed unit and/or the second distributed unit send/sends the stored data to the terminal device.

Optionally, when the first distributed unit or the second distributed unit detects that there is a packet loss of the data from the first central unit, processing may be performed in any one of the following manners (where the following uses the second distributed unit as an example for description):
Manner 1: The second distributed unit notifies the first central unit to retransmit lost data. For example, the second distributed unit notifies the first central unit by using a downlink data delivery status (downlink data delivery status, DDDS), and requests to retransmit the lost data.

Manner 2: When the second distributed unit belongs to the second access network device, and the first central unit and the first distributed unit belong to the first access network device, the second distributed unit notifies the first central unit to cancel coordinated transmission. In this implementation, the second distributed unit does not send a signal in a sending time period corresponding to lost data. After receiving a notification message from the second distributed unit, the first distributed unit may perform independent downlink data transmission.

Manner 3: The second distributed unit notifies, by using physical layer signaling or media access control layer signaling, the terminal device to stop receiving data in a slot x to a slot y (where the slot x to the slot y are sending slots corresponding to a packet loss). Optionally, the second distributed unit notifies the terminal device of a sequence number (for example, an SN 1, an SN 3, or an SN 5) of lost data. After determining the lost data according to an indication of the second distributed unit, the terminal device may no longer receive a signal in slots (namely, the slot x to the slot y) corresponding to the data, to save resources. If in the period of the slot x to the slot y, there is an available uplink slot, the terminal device may notify the first distributed unit of a packet loss status. After determining the lost data according to an indication of the terminal device, the first distributed unit may no longer send the data to the terminal device, to save resources.

It may be understood that the foregoing packet loss processing manner is applicable to a case in which the terminal device needs to receive complete signals from a plurality of network devices to correctly decode the data in some coordinated manners. In Manner 1, the second distributed unit may request the first central unit to retransmit the lost data. This is applicable to a case in which a moment at which the packet loss is detected is long away from a moment at which the packet loss is sent to the terminal device, and there is still time to resume the lost packet, to complete coordinated transmission. In Manner 2 and Manner 3, the first distributed unit can avoid unnecessary transmission and/or the terminal device can avoid unnecessary receiving, to reduce power consumption of an entire communication system. Manner 2 and Manner 3 are applicable to a scenario in which the moment at which the packet loss is detected and the moment at which the packet loss is sent to the terminal device are short.

Correspondingly, the terminal device receives the data from the first distributed unit and the data from the second distributed unit.

Optionally, if the terminal device does not correctly decode the data from the first distributed unit, the terminal device sends a first feedback message (for example, a NACK message) to the first distributed unit, and the first feedback message indicates that the terminal device fails to receive the data; or if the terminal device can correctly decode the data from the first distributed unit, the terminal device sends a second feedback message (for example, an ACK message) to the first distributed unit, and the second feedback message indicates that the data is successfully received. Similarly, if the terminal device does not correctly decode the data from the second distributed unit, the terminal device sends a first feedback message to the second distributed unit; or if the terminal device can correctly decode the data from the second distributed unit, the terminal device sends a second feedback message to the second distributed unit.

When the first distributed unit or the second distributed unit fails to receive the second feedback message, the first distributed unit or the second distributed unit retransmits the data. The following uses the first distributed unit as an example for description.

In an implementation, when the first distributed unit receives first feedback information from the terminal device, if the first distributed unit determines that the data fails to be sent, the first distributed unit retransmits the data.

In another implementation, when the first distributed unit does not receive second feedback information from the terminal device, the first distributed unit determines that the data fails to be sent. For example, if the first distributed unit does not receive the second feedback information from the terminal device in preset time, the first distributed unit determines that the data fails to be sent. In this case, the first distributed unit retransmits the data.

Therefore, in the foregoing solution, the terminal device may send the feedback message to the first distributed unit and the second distributed unit to indicate whether the data is successfully received, and the first distributed unit and the second distributed unit may determine, based on whether the terminal device performs feedback and content indicated by information fed back by the terminal device, whether the data is successfully sent or fails to be sent. When the data fails to be sent, the first distributed unit and the second distributed unit may retransmit the data that fails to be sent, thereby improving data transmission reliability. In comparison, there is no uplink process in the MBSFN technology shown in FIG. 3. To be specific, the terminal device cannot feed back whether the data is successfully received. In this case, a station that performs coordinated transmission cannot retransmit, based on a feedback of the terminal device, the data that fails to be transmitted. Consequently, this technology cannot meet some services with a high reliability requirement.

Optionally, when the first distributed unit determines that the data fails to be sent, the first distributed unit may send, to the second distributed unit, information indicating that the data fails to be sent. The information is used by the second distributed unit and the first distributed unit to synchronously transmit the data that fails to be sent again. The information indicating that the data fails to be sent may be, for example, a sequence number of the data. It may be understood that when the first distributed unit and the second distributed unit belong to a same access network device, the first distributed unit may directly send the indication information to the second distributed unit, or the first distributed unit may send the indication information to the second distributed unit through the first central unit; or when the first distributed unit and the second distributed unit belong to different access network devices, the first distributed unit may send the information to the second distributed unit through a central unit corresponding to the first distributed unit and a central unit corresponding to the second distributed unit. For example, the first distributed unit and the second central unit belong to the first access network device, and the second distributed unit and the second central unit belong to the second access network device. In this case, the first distributed unit sends, to the first central unit, the information indicating that the data fails to be sent, and then the first central unit determines that the second access network device is a station that performs coordinated transmission with the first access network device. Therefore, the first central unit sends the information to the second central unit in the second access network device, and then the second central unit sends the information to the second distributed unit. After receiving, from the first distributed unit, the information indicating that the data fails to be sent, the second distributed unit retransmits the data, that is, performs coordinated transmission with the first distributed unit. It should be understood that, in this manner, the second distributed unit needs to store some transmitted data; and when receiving, from the first distributed unit, information indicating to retransmit a specific piece of data, the second distributed unit retransmits the data. The second distributed unit may set a timer for each piece of data (packet), and start the timer after initially transmitting the data (packet). Before the timer expires, the second distributed unit stores the data (packet). When the timer expires, the second distributed unit clears the data (packet) from storage. It should be understood that the first distributed unit also uses a similar manner. When the second distributed unit indicates, to the first distributed unit, that a specific piece of data (packet) needs to be retransmitted, the first distributed unit reads the data from the storage, and performs retransmission.

Optionally, the first distributed unit may periodically exchange the information about the cached data with the second distributed unit. For example, the first distributed unit sends a sequence number of the cached data to the second distributed unit at an interval of 100 ms. After receiving the sequence number of the cached data from the first distributed unit, the second distributed unit determines whether the cached data in the first distributed unit is consistent with the cached data in the second distributed unit. If the cached data in the first distributed unit is inconsistent with the cached data in the second distributed unit, the second distributed unit updates the cached data in the second distributed unit to be consistent with the cached data in the first distributed unit. According to this solution, the first distributed unit and the second distributed unit align the coordinatedly transmitted data. For example, after the terminal device receives the data from the first distributed unit and the data from the second distributed unit, if both the data from the first distributed unit and the data from the second distributed unit are successfully decoded, the terminal device separately sends the second feedback message to the first distributed unit and the second distributed unit. If the first distributed unit correctly receives the second feedback message, but the second distributed unit incorrectly detects the second feedback message as the first feedback message, or the second distributed unit does not receive the second feedback message, the second distributed unit may retransmit the data. Consequently, the data subsequently coordinatedly transmitted by the first distributed unit and the second distributed unit cannot be aligned. However, in the foregoing solution, the cached data in the first distributed unit and the cached data in the second distributed unit may be periodically aligned, thereby avoiding a problem caused by non-alignment of the coordinatedly transmitted data.

Optionally, the first distributed unit may exchange the information about the cached data with the second distributed unit when a specific trigger condition is met. For example, when the first distributed unit receives the first feedback message from the terminal device, or when the first distributed unit continuously receives the first feedback message from the terminal device for a plurality of times, the first distributed unit sends a sequence number of the cached data to the second distributed unit. After receiving the sequence number of the cached data from the first distributed unit, the second distributed unit determines whether the cached data in the first distributed unit is consistent with the cached data in the second distributed unit. If the cached data in the first distributed unit is inconsistent with the cached data in the second distributed unit, the second distributed unit updates the cached data in the second distributed unit to be consistent with the cached data in the first distributed unit. According to this solution, the first distributed unit and the second distributed unit align the coordinatedly transmitted data.

The following describes a specific implementation in which the first distributed unit retransmits the data.

In an implementation, when the first distributed unit determines that the data fails to be sent, the first distributed unit retransmits the data at a next available moment of a moment that corresponds to a hybrid automatic repeat request process number and at which the data is sent.

For example, there is a correspondence between the time information and the hybrid automatic repeat request process number used for downlink transmission. That the time information is a packet data convergence protocol sequence number is used as an example. A correspondence between the packet data convergence protocol sequence number and the hybrid automatic repeat request process number may be preconfigured. Assuming that the first distributed unit and the second distributed unit negotiate to use eight hybrid automatic repeat request process numbers to communicate with the terminal device, and the eight hybrid automatic repeat request process numbers are 0 to 7, data with a packet data convergence protocol sequence number=0, 8, 16, 24, and the like uses a hybrid automatic repeat request process corresponding to the hybrid automatic repeat request process number 0 for data transmission, data with a packet data convergence protocol sequence number=1, 9, 17, 25, and the like uses a hybrid automatic repeat request process corresponding to the hybrid automatic repeat request process number 1 for data transmission, and so on. Alternatively, that the time information indicates a specific slot is used as an example. Correspondences between different slots and hybrid automatic repeat request process numbers may be preconfigured. In this case, transmission is performed through a hybrid automatic repeat request process corresponding to a hybrid automatic repeat request process number 0 in a slot 0, a slot 8, and a slot 16, transmission is performed through a hybrid automatic repeat request process corresponding to a hybrid automatic repeat request process number 1 in a slot 1, a slot 9, and a slot 17, and so on. It should be understood that, after the slot number is accumulated to a preset maximum value, the slot number is set to zero and then re-calculated. However, the foregoing correspondence may continue. For example, in a scenario in which one radio frame corresponds to 10 slots, 10 slots of a radio frame 0 may be denoted as a slot 0 to a slot 9, 10 slots of a radio frame 1 may be denoted as a slot 10 to a slot 19, 10 slots of a radio frame 2 may be denoted as a slot 20 to a slot 29, and so on.

During initial transmission, the hybrid automatic repeat request process number may be selected based on the foregoing correspondence to perform downlink transmission.

When retransmission needs to be performed, the data may be retransmitted at a next available moment corresponding to a hybrid automatic repeat request process number that is the same as that in the initial transmission. For example, in the foregoing example, the data with the packet data convergence protocol sequence number=0, 8, 16, 24, and the like uses the hybrid automatic repeat request process corresponding to the hybrid automatic repeat request process number 0 for data transmission. When the data with the packet data convergence protocol sequence number 8 needs to be retransmitted, the data with the packet data convergence protocol sequence number 8 may be retransmitted at a moment corresponding to original data with the packet data convergence protocol sequence number 16. In this implementation, a moment of downlink processing/sending of another untransmitted packet corresponding to the hybrid automatic repeat request process number is affected by the retransmission, and is correspondingly delayed backward. That is, the data with the packet data convergence protocol sequence number 16 is transmitted at a sending moment corresponding to original data with the packet data convergence protocol sequence number 24, and remaining data is similarly delayed.

It may be understood that the foregoing solutions related to sending time adjustment and retransmission are also applicable to the subsequent method 600, method 800, and method 1000. For brevity, details are not described subsequently.

According to the foregoing solutions, the first distributed unit and the second distributed unit can synchronously transmit the data to the terminal device, to improve data transmission reliability. In addition, when the data fails to be received, the terminal device may further provide a feedback to the first distributed unit or the second distributed unit, so that the first distributed unit or the second distributed unit may perform coordinated retransmission on the data that fails to be transmitted, thereby reducing a packet loss rate of the data and improving user experience.

It may be understood that the foregoing solutions may be applied to various communication systems, for example, a 5G communication system or a future 6G communication system. The 5G system is used as an example. In this embodiment of this application, the user plane function network element may correspond to a UPF in 5G, the access network device may correspond to a gNB in 5G, the central unit may correspond to a CU in the gNB, the distributed unit may correspond to a DU in the gNB, the hybrid automatic repeat request process number may correspond to a HARQ process number in 5G, the packet data convergence protocol may correspond to PDCP in 5G, the radio link control protocol may correspond to RLC in 5G, the media access control protocol may correspond to MAC in 5G, and the physical layer may correspond to PHY in 5G.

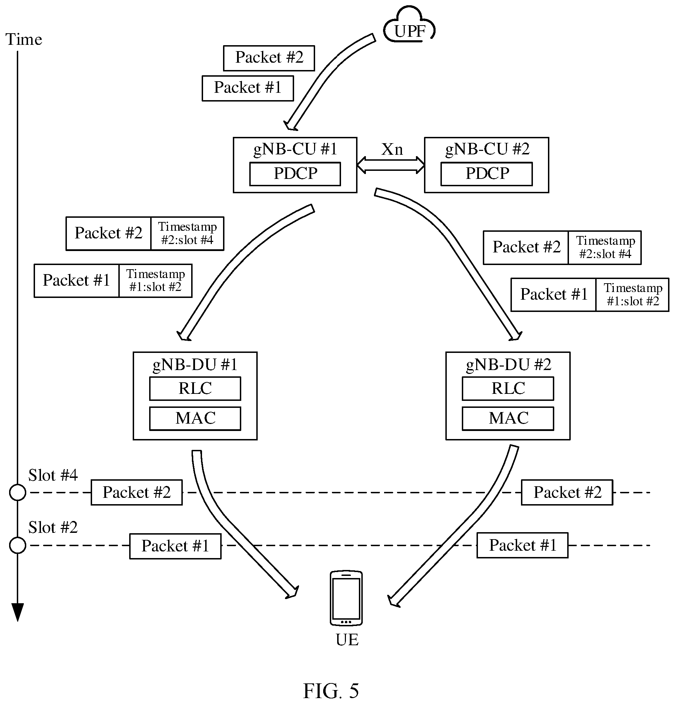

The following describes a possible example of the method 400 based on the 5G system with reference to FIG. 5.

In FIG. 5, a gNB-CU #1 and a gNB-DU #1 belong to a gNB #1, a gNB-CU #2 and a gNB-DU #2 belong to a gNB #2, and the gNB #1 and the gNB #2 are stations configured to perform coordinated transmission to UE. It is assumed that the gNB-CU #1 receives two packets from a UPF, and the two packets are respectively denoted as a packet #1 and a packet #2. The gNB-CU #1 generates time information timestamp #1 for the packet #1, generates time information timestamp #2 for the packet #2, adds the timestamp #1 to a PDCP header of the packet #1, and adds the timestamp #2 to a PDCP header of the packet #2, where the timestamp #1 indicates to send the packet #1 in a slot #2, and the timestamp #2 indicates to send the packet #2 in a slot #4. After duplicating the packet #1 and the packet #2, the gNB-CU #1 sends the packet #1 and the packet #2 to the gNB-DU #1, and sends the packet #1 and the packet #2 to the gNB-DU #2 through the gNB-CU #2. It should be understood that in some network deployment manners, the gNB-CU #1 may directly send the packet #1 and the packet #2 to the gNB-DU #2, or may forward the packet #1 and the packet #2 to the gNB-DU #2 through a core network node. The gNB-DU #1 and the gNB-DU #2 send the packet #1 to the UE in the slot #2 based on the timestamp #1, and send the packet #2 to the UE in the slot #4 based on the timestamp #2.

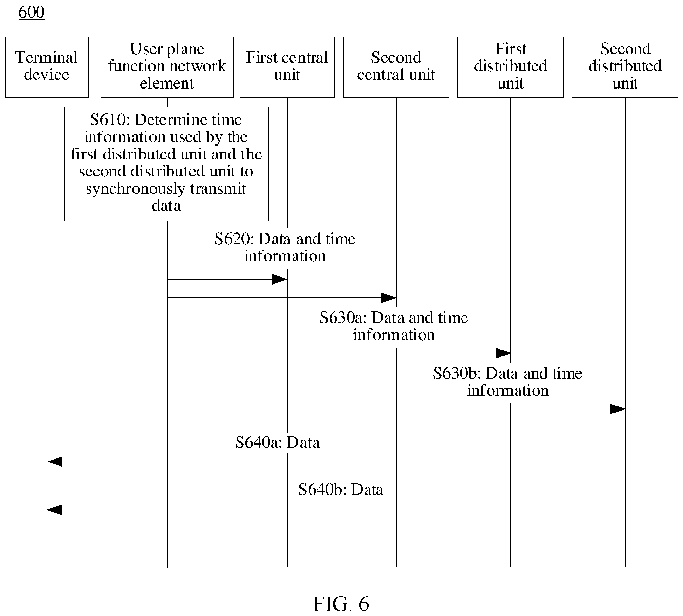

FIG. 6 is an example flowchart of a method 600 according to an embodiment of this application. In the method 600, a user plane function network element determines time information corresponding to data, and sends the data and the time information to a first central unit and a second central unit, so that the first central unit and the second central unit separately send the data and the time information to a first distributed unit and a second distributed unit that perform coordinated transmission on the data, and the first distributed unit and the second distributed unit synchronously send the data to a terminal device based on the time information.

The following describes the method 600 by using an example with reference to steps in FIG. 6.

S610: The user plane function network element determines the time information used by the first distributed unit and the second distributed unit to synchronously transmit the data.

For example, before sending downlink data, the user plane function network element determines the time information for the data, and the time information is used by the first distributed unit and the second distributed unit to synchronously transmit the data. For detailed descriptions of the first distributed unit, the second distributed unit, and the time information, refer to the part S420 in the method 400. Details are not described herein.

For example, the time information indicates one or more of the following: time for processing the data at a packet data convergence protocol layer; time for processing the data at a radio link control layer; time for processing the data at a media access control layer; and time for sending the data at a physical layer.

It may be understood that the time for processing the data at the packet data convergence protocol layer may be a moment at which processing performed on the data at the packet data convergence protocol layer starts, or may be a moment at which processing performed on the data at the packet data convergence protocol layer ends, or may be a time period for processing the data at the packet data convergence protocol layer. For descriptions of another example, refer to the part S420 in the method 400. Details are not described herein again.

The user plane function network element may determine the time information based on one or more of the following information: information about cached data in the first distributed unit, information about cached data in the second distributed unit, a transmission delay between the first central unit and the first distributed unit, a transmission delay between the second central unit and the second distributed unit, duration for processing the data by the first central unit and/or duration for processing the data by the first distributed unit, duration for processing the data by the second central unit and/or duration for processing the data by the second distributed unit, duration for duplicating and processing the data by the user plane function network element, a transmission delay between the user plane function network element and the first central unit, and a transmission delay between the user plane function network element and the second central unit. A specific manner in which the user plane function network element obtains the one or more of the foregoing information is similar to the manner in which the first central unit obtains the information used to determine the time information in S420 in the method 400, and a difference lies in different execution bodies and message transceiver nodes. For brevity, details are not described herein again.

S620: The user plane function network element sends the data and the time information to the first central unit, and sends the data and the time information to the second central unit. Correspondingly, the first central unit and the second central unit receive the data and the time information from the user plane function network element.

It may be understood that, in this embodiment, the first central unit and the first distributed unit belong to a first access network device, and the second central unit and the second distributed unit belong to a second access network device. Therefore, before S610, the first access network device and the second access network device may perform a negotiation procedure of coordinated transmission. For details, refer to S440 in the method 400. Details are not described herein again. It may be further understood that, after a station that performs coordinated transmission is determined through the negotiation procedure, the user plane function network element needs to be notified of identity information/address information of a plurality of stations that coordinate, so that the user plane function network element can send duplicated data to the plurality of corresponding stations.

After determining the time information corresponding to the data, the user plane function network element sends the data and the time information to the first central unit, and sends the data and the time information to the second central unit.

In an implementation, the user plane function network element may include the time information in a header of a tunnel carrying the data. For details, refer to the part S430 in the method 400. A difference lies in that, in S430, the first central unit sends the data and the time information to the first distributed unit, and sends the data and the time information to the second distributed unit, while in S620, the user plane function network element sends the data and the time information to the first central unit, and sends the data and the time information to the second central unit. For brevity, details are not described herein again.

It may be understood that the foregoing embodiment is described by using an example in which the user plane function network element directly sends the data and the time information to the first central unit and the second central unit. However, it may be understood that the user plane function network element may first send the data and the time information to the first central unit, and then the first central unit sends the data and the time information to the second central unit. This is not limited in this application.

S630a: The first central unit sends the data and the time information to the first distributed unit.

S630b: The second central unit sends the data and the time information to the second distributed unit.

For example, after receiving the data and the time information from the user plane function network element, the first central unit sends the data and/or the time information to the first distributed unit. Similarly, after receiving the data and the time information from the user plane function network element, the second central unit sends the data and/or the time information to the second distributed unit. It should be understood that, if the time information indicates the time for processing the data at the packet data convergence protocol layer, the first central unit may not send the time information to the first distributed unit, or the second central unit may not send the time information to the second distributed unit. In this case, after receiving the data from the first central unit, the first distributed unit processes the data at the packet data convergence protocol layer. Similarly, after receiving the data from the second central unit, the second distributed unit processes the data at the packet data convergence protocol layer. In the following steps S640a and S640b, a case in which the first central unit sends the time information to the first distributed unit and the second central unit sends the time information to the second distributed unit is used as an example for description.

Optionally, if a security-related operation such as encryption and/or integrity protection needs to be performed on the coordinatedly transmitted data in the first central unit and the second central unit, the first central unit and the second central unit need to use a same security parameter (for example, a key or an encryption algorithm) to perform security processing such as encryption on the data. The first central unit and the second central unit may determine the same security parameter through negotiation in the negotiation procedure of coordinated transmission. The first central unit and the second central unit process the data by using the same security parameter, to ensure consistency of encrypted data, and avoid a case in which coordinated transmission fails because the data received by the terminal device is inconsistent. It should be understood that this step is not limited to this embodiment, but is also applicable to another solution of this application. In other words, this solution is applicable to a scenario in which different network devices perform security-related operations on the data.

S640a: The first distributed unit sends the data to the terminal device based on the time information.

S640b: The second distributed unit sends the data to the terminal device based on the time information.

S640a and S640b are similar to S450a and S450b in the method 400. For brevity, details are not described herein again.

According to the foregoing solutions, the first distributed unit and the second distributed unit can synchronously transmit the data to the terminal device, to improve data transmission reliability. In addition, in this solution, because the user plane function network element directly duplicates the data and distributes the data to the plurality of stations that perform coordinated transmission, there is no need to wait for one station to process the data and then forward the data to another station, so that an overall communication delay can be reduced.

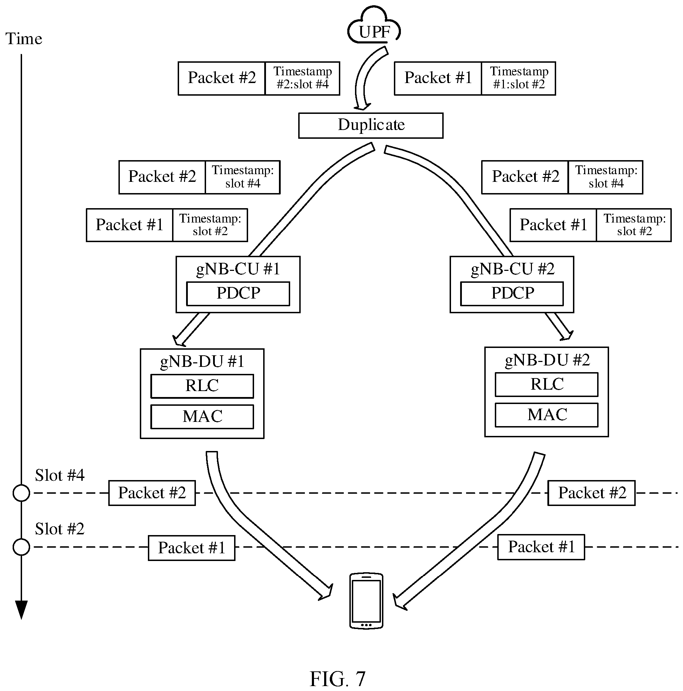

It may be understood that the foregoing solutions may be applied to various communication systems, for example, a 5G communication system or a future 6G communication system. The following describes a possible example of the method 600 based on the 5G system with reference to FIG. 7.

In FIG. 7, a gNB-CU #1 and a gNB-DU #1 belong to a gNB #1, a gNB-CU #2 and a gNB-DU #2 belong to a gNB #2, and the gNB #1 and the gNB #2 are stations configured to perform coordinated transmission to UE.

Assuming that the packet #1 and the packet #2 are to-be-transmitted downlink data, a UPF generates time information timestamp #1 for the packet #1, generates time information timestamp #2 for the packet #2, adds the timestamp #1 to a GTP header of the packet #1, and adds the timestamp #2 to a GTP header of the packet #2, where the timestamp #1 indicates to send the packet #1 in a slot #2, and the timestamp #2 indicates to send the packet #2 in a slot #4. After duplicating the packet #1 to which the timestamp #1 is added, the UPF separately sends, to the gNB-CU #1 and the gNB-CU #2, the packet #1 to which the timestamp #1 is added. Similarly, after duplicating the packet #2 to which the timestamp #2 is added, the UPF separately sends, to the gNB-CU #1 and the gNB-CU #2, the packet #2 to which the timestamp #2 is added.

The gNB-CU #1 sends, to the gNB-DU #1, the packet #1 to which the timestamp #1 is added and the packet #2 to which the timestamp #2 is added. The gNB-DU #1 deletes the timestamp #1 in the packet #1, and sends the packet #1 to the UE in the slot #2 based on the timestamp #1; and deletes the timestamp #2 in the packet #2, and sends the packet #2 to the UE in the slot #4 based on the timestamp #2. It should be understood that in a possible implementation, for the packet #1 that is from the UPF and that includes the timestamp #1, the gNB-CU #1 does not directly forward the packet #1 to the gNB-DU #1, but performs an additional data processing process, for example, reads the timestamp #1 from a GTP-U header, adds the timestamp #1 to a PDCP header, and sends the PDCP header to the gNB-DU #1. In this application, a packet, of a specific layer of protocol, in which the time information is carried is not limited, and the time information may also be indicated by using a cross-layer indication.

Similarly, the gNB-CU #2 sends, to the gNB-DU #2, the packet #1 to which the timestamp #1 is added and the packet #2 to which the timestamp #2 is added. The gNB-DU #2 deletes the timestamp #1 in the packet #1, and sends the packet #1 to the UE in the slot #2 based on the timestamp #1; and deletes the timestamp #2 in the packet #2, and sends the packet #2 to the UE in the slot #4 based on the timestamp #2. It should be understood that in a possible implementation, for the packet #1 that is from the UPF and that includes the timestamp #1, the gNB-CU #2 does not directly forward the packet #1 to the gNB-DU #2, but performs an additional data processing process, for example, reads the timestamp #1 from a GTP-U header, adds the timestamp #1 to a PDCP header, and sends the PDCP header to the gNB-DU #2. In this application, a packet, of a specific layer of protocol, in which the time information is carried is not limited, and the time information may also be indicated by using a cross-layer indication.

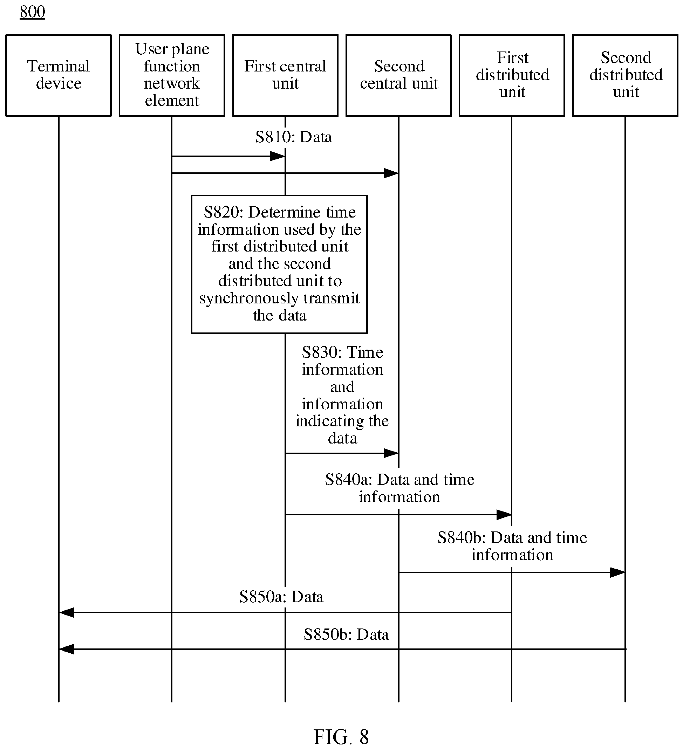

FIG. 8 is an example flowchart of a method 800 according to an embodiment of this application. In the method 800, a user plane function network element sends data to a first central unit and a second central unit, and then the first central unit determines time information corresponding to the data, and sends the time information to the second central unit. The first central unit and the second central unit separately send the data and the time information to a first distributed unit and a second distributed unit that perform coordinated transmission on the data, and the first distributed unit and the second distributed unit synchronously send the data to a terminal device based on the time information.

The following describes the method 800 by using an example with reference to steps in FIG. 8.

S810: The user plane function network element separately sends the data to the first central unit and the second central unit. Correspondingly, the first central unit and the second central unit separately receive the data from the user plane function network element.

It may be understood that, in this embodiment, the first central unit and the first distributed unit belong to a first access network device, and the second central unit and the second distributed unit belong to a second access network device. Therefore, before S810, the first access network device and the second access network device may perform a negotiation procedure of coordinated transmission. For details, refer to S440 in the method 400. Details are not described herein again. It may be further understood that, after a station that performs coordinated transmission is determined through the negotiation procedure, the user plane function network element needs to be notified of identity information/address information of a plurality of stations that coordinate, so that the user plane function network element can send duplicated data to the plurality of corresponding stations.

For example, the user plane function network element duplicates the data, and then separately sends the data to the first central unit and the second central unit.

S820: The first central unit determines the time information used by the first distributed unit and the second distributed unit to synchronously transmit the data.

S820 is similar to S420 in the method 400, and details are not described herein again.

However, it may be understood that the first central unit may determine the time information after receiving the data from the user plane function network element, or may pre-determine the time information before receiving the data from the user plane function network element. The time information is pre-determined, so that a delay can be reduced.

S830: The first central unit sends, to the second central unit, the time information and information indicating the data.

For example, if the first central unit pre-determines the time information before receiving the data, after receiving the data from the user plane function network element, the first central unit sends, to the second central unit, the time information and the information indicating the data, for example, a sequence number of the data; or if the first central unit determines the time information after receiving the data from the user plane function network element, the first central unit sends, to the second central unit, the time information and the information indicating the data after determining the time information corresponding to the data. It may be understood that, if the sequence number of the data is for representing the time information corresponding to the data, only the sequence number needs to be sent in S830.

It may be understood that S820 may also be performed by the second central unit. In this case, the second central unit sends, to the first central unit, the time information and the information indicating the data. The first central unit and the second central unit may negotiate in advance to determine who determines and provides the time information. For example, the first central unit and the second central unit may determine, in a negotiation procedure of synchronous transmission, who determines and provides the time information. Alternatively, the time information may be determined and provided by a station (namely, the first central unit) that initiates a coordinated transmission request by default.

S840a: The first central unit sends the data and the time information to the first distributed unit.

S840a is similar to S430a in the method 400, and details are not described herein again.

S840b: The second central unit sends the data and the time information to the second distributed unit.

For example, after receiving the time information and the information indicating the data from the first central unit, the second central unit determines the data based on the information indicating the data, and sends the data and the time information to the second distributed unit. A specific sending process is similar to S430b in the method 400, and details are not described herein again.

Optionally, if a security-related operation such as encryption and/or integrity protection needs to be performed on the coordinatedly transmitted data in the first central unit and the second central unit, the first central unit and the second central unit need to use a same security parameter (for example, a key or an encryption algorithm) to perform security processing such as encryption on the data. For a detailed example, refer to the part S630b in the method 600. Details are not described herein again.

S850a: The first distributed unit sends the data to the terminal device based on the time information.

S850b: The second distributed unit sends the data to the terminal device based on the time information.

S850a and S850b are similar to S450a and S450b in the method 400. For brevity, details are not described herein again.

According to the foregoing solutions, the first distributed unit and the second distributed unit can synchronously transmit the data to the terminal device, to improve data transmission reliability. In addition, in this solution, because the user plane function network element directly duplicates the data and distributes the data to the plurality of stations that perform coordinated transmission, there is no need to wait for one station to process the data and then forward the data to another station, the time information may be planned by the first central unit in advance and sent to the second central unit, and a delay may be reduced.

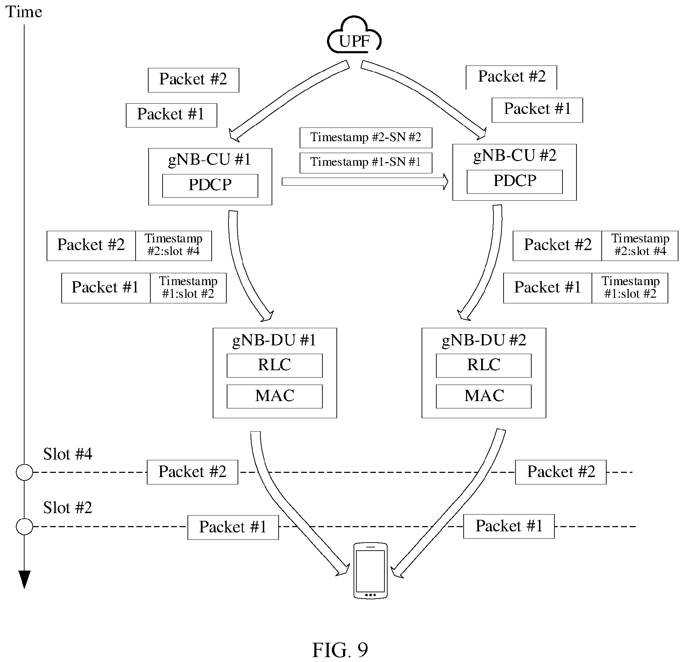

It may be understood that the foregoing solutions may be applied to various communication systems, for example, a 5G communication system or a future 6G communication system. The following describes a possible example of the method 800 based on the 5G system with reference to FIG. 9.

In FIG. 9, a gNB-CU #1 and a gNB-DU #1 belong to a gNB #1, a gNB-CU #2 and a gNB-DU #2 belong to a gNB #2, and the gNB #1 and the gNB #2 are stations configured to perform coordinated transmission to UE.

After duplicating to-be-transmitted data packet #1 and packet #2, the UPF sends the packet #1 and packet #2 to the gNB-CU #1, and sends the packet #1 and packet #2 to the gNB-CU #2. The gNB-CU #1 generates time information timestamp #1 corresponding to the packet #1, and sends, to the gNB-CU #2, the timestamp #1 and an SN #1 corresponding to the packet #1. Similarly, the gNB-CU #1 generates time information timestamp #2 corresponding to the packet #2, and sends, to the gNB-CU #2, the timestamp #2 and an SN #2 corresponding to the packet #2. The timestamp #1 indicates to send the packet #1 in a slot #2, and the timestamp #2 indicates to send the packet #2 in a slot #4.

The gNB-CU #1 adds the timestamp #1 to a PDCP header of the packet #1, adds the timestamp #2 to a PDCP header of the packet #2, and sends, to the gNB-DU #1, the packet #1 to which the timestamp #1 is added and the packet #2 to which the timestamp #2 is added. The gNB-DU #1 deletes the timestamp #1 in the packet #1, and sends the packet #1 to the UE in the slot #2 based on the timestamp #1; and deletes the timestamp #2 in the packet #2, and sends the packet #2 to the UE in the slot #4 based on the timestamp #2.

After receiving the timestamp #1 and the SN #1 from the gNB-CU #1, the gNB-CU #2 determines the corresponding packet #1 based on the SN #1, adds the timestamp #1 to the PDCP header of the packet #1, and sends, to the gNB-DU #1, the packet #1 to which the timestamp #1 is added. Similarly, after receiving the timestamp #2 and the SN #2 from the gNB-CU #1, the gNB-CU #2 determines the corresponding packet #2 based on the SN #2, adds the timestamp #2 to the PDCP header of the packet #2, and sends, to the gNB-DU #2, the packet #2 to which the timestamp #2 is added. The gNB-DU #2 deletes the timestamp #1 in the packet #1, and sends the packet #1 to the UE in the slot #2 based on the timestamp #1; and deletes the timestamp #2 in the packet #2, and sends the packet #2 to the UE in the slot #4 based on the timestamp #2.

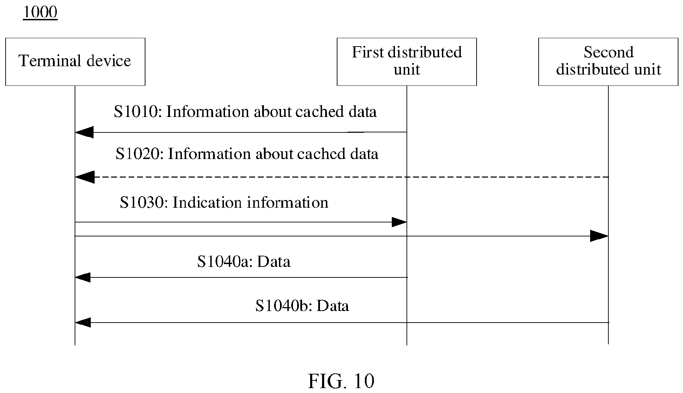

FIG. 10 is a schematic flowchart of a method 1000 according to an embodiment of this application. In the method 1000, a first distributed unit and/or a second distributed unit send/sends information about cached data to a terminal device, and the terminal device determines to-be-transmitted data based on the received information about the cached data, and indicates the to-be-transmitted data to the first distributed unit and the second distributed unit that are used to perform coordinated transmission on the data. The first distributed unit and the second distributed unit synchronously send the data to the terminal device according to an indication of the terminal device.

The following describes the method 1000 by using an example with reference to steps in FIG. 10.

S1010: The first distributed unit sends the information about the cached data to the terminal device. Correspondingly, the terminal device receives the information about the cached data from the first distributed unit.

For example, before S1010, the first distributed unit receives the data from a first central unit, and locally caches the data. Before performing coordinated transmission of downlink data, the first distributed unit sends information about cached downlink data to the terminal device. The information about the cached downlink data includes any one or both of the following: a sequence number of the cached data in the first distributed unit and a size (for example, a quantity of bytes) of the cached data in the first distributed unit. The information about the cached downlink data may be carried in a radio resource control (radio resource control, RRC) message, a media access control control element (media access control control element, MAC CE), downlink control information (downlink control information, DCI), or a message in another form. This is not limited in this application. Alternatively, the first distributed unit may attach the information about the cached data to each downlink packet as padding information. This is not limited in this application.

Optionally, the first distributed unit may further send identification information of the second distributed unit to the terminal device, and the second distributed unit is configured to perform synchronous transmission with the first distributed unit to the terminal device. Correspondingly, the terminal device receives the identification information of the second distributed unit from the first distributed unit, and the terminal device may determine, based on the identification information, that the second distributed unit is a distributed unit that performs synchronous transmission with the first distributed unit.

Optionally, in S1020, the second distributed unit sends the information about the cached downlink data to the terminal device. Correspondingly, the terminal device receives the information about the cached downlink data from the second distributed unit.

S1020 is similar to S1010, and a difference lies in that S1020 is performed by the second distributed unit. Details are not described herein again.

It may be understood that any station (for example, the first distributed unit in this embodiment of this application) in the plurality of stations that perform coordinated transmission may send the information about the cached downlink data to the terminal device, or one or more stations (for example, the first distributed unit and the second distributed unit in this embodiment of this application) in the plurality of stations that perform coordinated transmission may send the information about the cached downlink data to the terminal device. This is not limited in this application.

It may be further understood that, if the terminal device receives the information, about the cached downlink data, sent by the plurality of stations, the terminal device may determine whether synchronous transmission can be performed. For example, the terminal device receives the information about the cached data in the first distributed unit and the information about the cached data in the second distributed unit. When the terminal device determines, based on the cached data in the first distributed unit and the cached data in the second distributed unit, that synchronous transmission can be performed, the terminal device performs S1030. Specifically, the terminal device determines indication information. For a specific example, refer to the descriptions of S1030. Details are not described herein.

For example, when the terminal device determines that there is same data between the cached data in the first distributed unit and the cached data in the second distributed unit, the terminal device determines that synchronous transmission can be performed. For example, a first terminal device receives a sequence number (denoted as a first sequence number) cached in the first distributed unit and receives a sequence number (denoted as a second sequence number) of the cached data in the second distributed unit. When there is a same sequence number between the first sequence number and the second sequence number, or when there is an intersection between the first sequence number and the second sequence number, the terminal device determines that there is same data between the cached data in the first distributed unit and the cached data in the second distributed unit. Alternatively, when determining that an amount of cached data in the first distributed unit is the same as an amount of cached data in the second distributed unit, or when determining that a difference between an amount of cached data in the first distributed unit and an amount of cached data in the second distributed unit is less than or equal to a specified threshold, the terminal device determines that synchronous transmission can be performed. Alternatively, when determining that a size of the cached data in the first distributed unit is the same as a size of the cached data in the second distributed unit, or when determining that a difference between a size of the cached data in the first distributed unit and a size of the cached data in the second distributed unit is less than or equal to a specified threshold, the terminal device determines that synchronous transmission can be performed.

The terminal device sends a notification message to the first distributed unit and/or the second distributed unit when determining, based on the cached data in the first distributed unit and the cached data in the second distributed unit, that synchronous transmission cannot be performed, where the notification message is for notifying that the data in the first distributed unit and the data in the second distributed unit cannot be synchronously transmitted.

For example, when determining that there is no same data between the cached data in the first distributed unit and the cached data in the second distributed unit, the terminal device determines that synchronous transmission cannot be performed. For example, a first terminal device receives a sequence number (denoted as a first sequence number) cached in the first distributed unit and receives a sequence number (denoted as a second sequence number) of the cached data in the second distributed unit. When there is no same sequence number between the first sequence number and the second sequence number, or when there is no intersection between the first sequence number and the second sequence number, the terminal device determines that the cached data in the first distributed unit and the cached data in the second distributed unit cannot be synchronously transmitted. Alternatively, when determining that an amount of cached data in the first distributed unit is not the same as an amount of cached data in the second distributed unit, or when determining that a difference between an amount of cached data in the first distributed unit and an amount of cached data in the second distributed unit is greater than or equal to a specified threshold, the terminal device determines that synchronous transmission cannot be performed. Alternatively, when determining that a size of the cached data in the first distributed unit is not the same as a size of the cached data in the second distributed unit, or when determining that a difference between a size of the cached data in the first distributed unit and a size of the cached data in the second distributed unit is greater than or equal to a specified threshold, the terminal device determines that synchronous transmission cannot be performed.

After receiving a notification message from the terminal device, the first distributed unit and the second distributed unit synchronize the cached downlink data based on the notification message, or the first distributed unit performs independent transmission.

S1030: The terminal device separately sends indication information to the first distributed unit and the second distributed unit. Correspondingly, the first distributed unit and the second distributed unit separately receive the indication information from the terminal device.

For example, after receiving the information about the cached data in the first distributed unit, the terminal device determines the indication information based on the information about the cached data in the first distributed unit. The indication information indicates the information about the data synchronously transmitted by the first distributed unit and the second distributed unit to the terminal device. For example, the indication information may be at least one of the following information: a sequence number of next one or more pieces of to-be-received data, a radio link control layer protocol processing window of next one or more pieces of to-be-received data, and a size of next one or more pieces of to-be-received data. The radio link control layer protocol processing window may be a sequence number range of a to-be-sent radio link control layer protocol service data unit (for example, an RLC SDU in 5G), and only a radio link control layer protocol service data unit within the range is sent.

If the terminal device receives the information about the cached data in the first distributed unit and the information about the cached data in the second distributed unit, and determines, based on the cached data in the first distributed unit and the cached data in the second distributed unit, that synchronous transmission can be performed, the terminal device determines the indication information. For example, if sequence numbers of the cached data in the first distributed unit are 1, 2, 3, and 4, and sequence numbers of the cached data in the second distributed unit are 1, 3, 4, and 5, the terminal device may determine that there is same data between the cached data in the first distributed unit and the cached data in the second distributed unit, namely, data whose sequence numbers are 1, 3, and 4. In this case, the data indicated by the indication information determined by the terminal device needs to be one or more of the pieces of data whose sequence numbers are 1, 3, and 4.

Then, the terminal device separately sends the indication information to the first distributed unit and the second distributed unit. It may be understood that, if the terminal device receives only the information about the cached data from the first distributed unit (that is, the terminal device does not receive the information about the cached data from the second distributed unit), the terminal device may determine, based on the identification information of the second distributed unit from the first distributed unit, that the second distributed unit is a distributed unit that performs coordinated transmission with the first distributed unit, so that the terminal device can send the indication information to the second distributed unit. Optionally, the terminal device may further send the time information to the first distributed unit and the second distributed unit, where the time information indicates the time at which the data indicated by the indication information is sent at the physical layer.

S1040a: The first distributed unit sends the data to the terminal device based on the indication information.

For example, after receiving the indication information from the terminal device, the first distributed unit determines the to-be-transmitted data based on the indication information, and then sends the data to the terminal device.

Optionally, if the first distributed unit further receives the time information from the terminal device, the first distributed unit sends the data to the terminal device at the time indicated by the time information.

S1040b: The second distributed unit sends the data to the terminal device based on the indication information.

S1040b is similar to S1040a, and a difference lies in that S1040b is performed by the second distributed unit, and S1040a is performed by the first distributed unit. Details are not described herein again.

According to the foregoing solutions, the first distributed unit and the second distributed unit can synchronously transmit the data to the terminal device, to improve data transmission reliability.

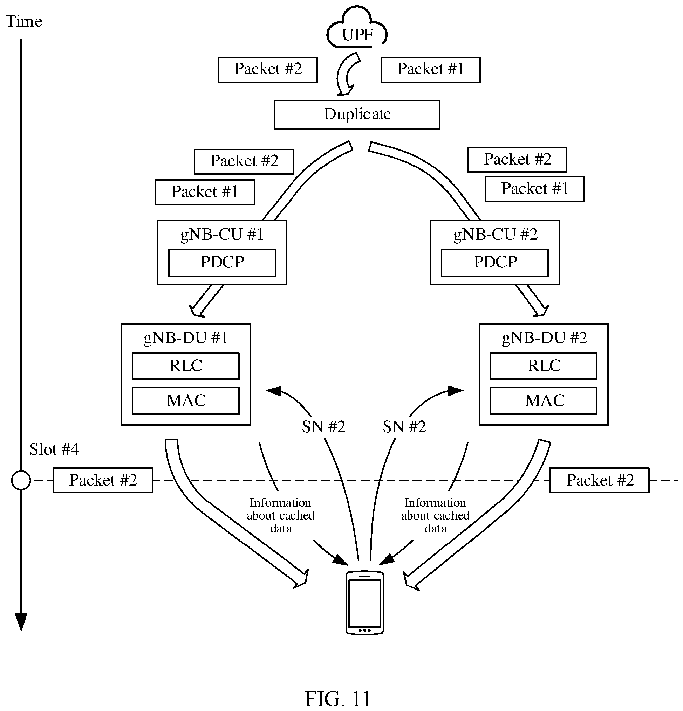

It may be understood that the foregoing solutions may be applied to various communication systems, for example, a 5G communication system or a future 6G communication system. The following describes a possible example of the method 1000 based on the 5G system with reference to FIG. 11.

In FIG. 11, a gNB-CU #1 and a gNB-DU #1 belong to a gNB #1, a gNB-CU #2 and a gNB-DU #2 belong to a gNB #2, and the gNB #1 and the gNB #2 are stations configured to perform coordinated transmission to UE.

The gNB-DU #1 obtains downlink data (denoted as a packet #1 and a packet #2) from a UPF through the gNB-CU #1, and locally caches the downlink data. Similarly, the gNB-DU #2 obtains downlink data (namely, a packet #1 and a packet #2) from the UPF through the gNB-CU #2, and locally caches the downlink data. The gNB-DU #1 sends information about the cached data in the gNB-DU #1 to the UE, and the gNB-DU #2 also sends information about the cached data in the gNB-DU #2 to the UE. When the cached data in the gNB-DU #1 is consistent with the cached data in the gNB-DU #2, the UE determines to-be-transmitted data based on the information about the cached data in the gNB-DU #1 (or may be the gNB-DU #2), and sends a sequence number (denoted as an SN #2) of the to-be-transmitted data to the gNB-DU #1 and the gNB-DU #2. After receiving the SN #2, the gNB-DU #1 and the gNB-DU #2 send, based on the SN #2, the packet #2 corresponding to the SN #2 to the UE.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

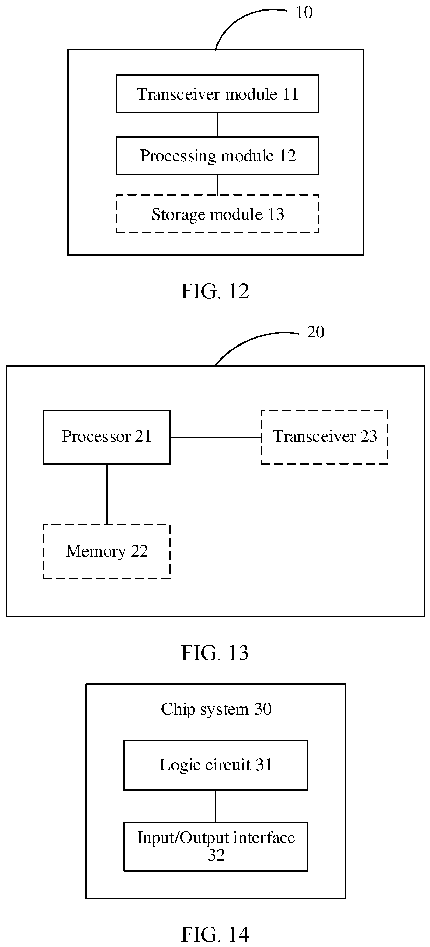

FIG. 12 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform receiving and sending related operations. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement an action of the device or the network element in the foregoing method embodiments.

In a first design, the apparatus 10 may correspond to the first central unit in the foregoing method embodiments, or may be a component (for example, a chip) of the first central unit.

The apparatus 10 may implement corresponding steps or procedures performed by the first central unit in the foregoing method embodiments. The transceiver module 11 may be configured to perform receiving and sending related operations of the first central unit in the foregoing method embodiments, and the processing module 12 may be configured to perform processing related operations of the first central unit in the foregoing method embodiments.

In a possible implementation, the transceiver module 11 is configured to receive data from a user plane function network element; the processing module 12 is configured to determine time information used by a first distributed unit and a second distributed unit to synchronously transmit the data; and the transceiver module 11 is further configured to send the data and the time information to the first distributed unit, and send the data and the time information to the second distributed unit.

In another possible implementation, the transceiver module 11 is configured to receive data from a user plane function network element; the processing module 12 is configured to determine time information used by a first distributed unit and a second distributed unit to synchronously transmit the data; and the transceiver module 11 is further configured to send the data and the time information to the first distributed unit, and send, to a second central unit, the time information and information indicating the data, where the second central unit corresponds to the second distributed unit.

In still another possible implementation, the transceiver module 11 is configured to receive data from a user plane function network element and time information corresponding to the data; and the transceiver module 11 is further configured to send the data and the time information to a first distributed unit, where the time information is used by the first distributed unit and a second distributed unit to synchronously transmit the data.

In a second design, the apparatus 10 may correspond to the second central unit in the foregoing method embodiments, or may be a component (for example, a chip) of the second central unit.

The apparatus 10 may implement corresponding steps or procedures performed by the second central unit in the foregoing method embodiments. The transceiver module 11 may be configured to perform receiving and sending related operations of the second central unit in the foregoing method embodiments, and the processing module 12 may be configured to perform processing related operations of the second central unit in the foregoing method embodiments.

In a possible implementation, the transceiver module 11 is configured to receive data from a user plane function network element; the transceiver module 11 is further configured to receive time information that is from a first central unit and that is used by a first distributed unit and a second distributed unit to synchronously transmit the data, where the first distributed unit corresponds to the first central unit; and the transceiver module 11 is further configured to send the data and the time information to the second distributed unit.

In a third design, the apparatus 10 may correspond to the first distributed unit or the second distributed unit in the foregoing method embodiments, or may be a component (for example, a chip) of the first distributed unit or the second distributed unit.

The apparatus 10 may implement corresponding steps or procedures performed by the first distributed unit or the second distributed unit in the foregoing method embodiments. The transceiver module 11 may be configured to perform receiving and sending related operations of the first distributed unit or the second distributed unit in the foregoing method embodiments, and the processing module 12 may be configured to perform processing related operations of the first distributed unit or the second distributed unit in the foregoing method embodiments.

In a possible implementation, the transceiver module 11 is configured to receive data from a first central unit and time information used by the first distributed unit and a second distributed unit to synchronously transmit the data; and the processing module 12 is configured to send the data to a terminal device based on the time information.

In another possible implementation, the transceiver module 11 is configured to receive indication information from a terminal device, where the indication information indicates information about data that is synchronously transmitted by a first distributed unit and a second distributed unit to the terminal device; and the processing module 12 is configured to send the data to the terminal device based on the indication information.

In a fourth design, the apparatus 10 may correspond to the terminal device in the foregoing method embodiments, or may be a component (for example, a chip) of the terminal device.

The apparatus 10 may implement corresponding steps or procedures performed by the terminal device in the foregoing method embodiments. The transceiver module 11 may be configured to perform receiving and sending related operations of the terminal device in the foregoing method embodiments, and the processing module 12 may be configured to perform processing related operations of the terminal device in the foregoing method embodiments.

In a possible implementation, the transceiver module 11 is configured to receive information about cached data from a first distributed unit; and the transceiver module 11 is further configured to separately send indication information to the first distributed unit and a second distributed unit, where the indication information is determined based on the information about the cached data, and the indication information indicates the information about the data synchronously transmitted by the first distributed unit and the second distributed unit to the terminal device.

In a fifth design, the apparatus 10 may correspond to the user plane function network element in the foregoing method embodiments, or may be a component (for example, a chip) of the user plane function network element.

The apparatus 10 may implement corresponding steps or procedures performed by the user plane function network element in the foregoing method embodiments. The transceiver module 11 may be configured to perform receiving and sending related operations of the user plane function network element in the foregoing method embodiments, and the processing module 12 may be configured to perform processing related operations of the user plane function network element in the foregoing method embodiments.

In a possible implementation, the processing module 12 is configured to determine time information used by a first distributed unit and a second distributed unit to synchronously transmit data; and the transceiver module 11 is configured to send the data and the time information to a first central unit, where the first central unit corresponds to the first distributed unit.

It should be understood that a specific process in which the modules perform the foregoing corresponding steps has been described in detail in the foregoing method embodiments. For brevity, details are not described herein again.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 10 may be specifically the first central unit in the foregoing embodiments, and may be configured to perform procedures and/or steps corresponding to the first central unit in the foregoing method embodiments; or the apparatus 10 may be specifically the second central unit in the foregoing embodiments, and may be configured to perform procedures and/or steps corresponding to the second central unit in the foregoing method embodiments; or the apparatus 10 may be specifically the first distributed unit or the second distributed unit in the foregoing embodiments, and may be configured to perform procedures and/or steps corresponding to the first distributed unit or the second distributed unit in the foregoing method embodiments; or the apparatus 10 may be specifically the terminal device in the foregoing embodiments, and may be configured to perform procedures and/or steps corresponding to the terminal device in the foregoing method embodiments; or the apparatus 10 may be specifically the user plane function network element in the foregoing embodiments, and may be configured to perform procedures and/or steps corresponding to the user plane function network element in the foregoing method embodiments. To avoid repetition, details are not described herein again.

The apparatus 10 in the foregoing solutions has a function of implementing corresponding steps performed by the device (for example, the first central unit, the second central unit, the first distributed unit or the second distributed unit, the terminal device, or the user plane function network element) in the foregoing methods. The function may be implemented by hardware, or may be implemented by hardware executing corresponding software. The hardware or software includes one or more modules corresponding to the foregoing function. For example, a transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform receiving and sending operations and processing related operations in the method embodiments.

In addition, the transceiver module 11 may alternatively be a transceiver circuit (for example, may include a receiving circuit and a sending circuit), and the processing module may be a processing circuit.

FIG. 13 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 13, the apparatus 20 further includes the memory 22, and the memory 22 is configured to store the computer program or the instructions and/or the data. The memory 22 may be integrated with the processor 21, or may be disposed separately. Optionally, there are one or more memories 22.

Optionally, as shown in FIG. 13, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement the operations performed by the first central unit in the foregoing method embodiments.

In another solution, the apparatus 20 is configured to implement the operations performed by the second central unit in the foregoing method embodiments.

In another solution, the apparatus 20 is configured to implement the operations performed by the first distributed unit or the second distributed unit in the foregoing method embodiments.

In another solution, the apparatus 20 is configured to implement the operations performed by the terminal device in the foregoing method embodiments.

In another solution, the apparatus 20 is configured to implement the operations performed by the user plane function network element in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of an example but not limitations, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described in this specification is intended to include, but is not limited to, these memories and any memory of another proper type.

FIG. 14 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement the operations performed by the first central unit in the foregoing method embodiments.

For example, the logic circuit 31 is configured to implement processing related operations performed by the first central unit in the foregoing method embodiments, for example, processing related operations performed by the first central unit in the embodiments shown in FIG. 4, FIG. 6, FIG. 8, and FIG. 10. The input/output interface 32 is configured to implement sending and/or receiving related operations performed by the first central unit in the foregoing method embodiments, for example, sending and/or receiving related operations performed by the first central unit in the embodiments shown in FIG. 4, FIG. 6, FIG. 8, and FIG. 10.

In another solution, the chip system 30 is configured to implement the operations performed by the second central unit in the foregoing method embodiments.

For example, the logic circuit 31 is configured to implement processing related operations performed by the second central unit in the foregoing method embodiments, for example, processing related operations performed by the second central unit in the embodiments shown in FIG. 4, FIG. 6, FIG. 8, and FIG. 10. The input/output interface 32 is configured to implement sending and/or receiving related operations performed by the second central unit in the foregoing method embodiments, for example, sending and/or receiving related operations performed by the second central unit in the embodiments shown in FIG. 4, FIG. 6, FIG. 8, and FIG. 10.

In another solution, the chip system 30 is configured to implement the operations performed by the first distributed unit or the second distributed unit in the foregoing method embodiments.

For example, the logic circuit 31 is configured to implement processing related operations performed by the first distributed unit or the second distributed unit in the foregoing method embodiments, for example, processing related operations performed by the first distributed unit or the second distributed unit in the embodiments shown in FIG. 4, FIG. 6, FIG. 8, and FIG. 10. The input/output interface 32 is configured to implement sending and/or receiving related operations performed by the first distributed unit or the second distributed unit in the foregoing method embodiments, for example, sending and/or receiving related operations performed by the first distributed unit or the second distributed unit in the embodiments shown in FIG. 4, FIG. 6, FIG. 8, and FIG. 10.

In another solution, the chip system 30 is configured to implement the operations performed by the terminal device in the foregoing method embodiments.

For example, the logic circuit 31 is configured to implement processing related operations performed by the terminal device in the foregoing method embodiments, for example, processing related operations performed by the terminal device in the embodiments shown in FIG. 4, FIG. 6, FIG. 8, and FIG. 10. The input/output interface 32 is configured to implement sending and/or receiving related operations performed by the terminal device in the foregoing method embodiments, for example, sending and/or receiving related operations performed by the terminal device in the embodiments shown in FIG. 4, FIG. 6, FIG. 8, and FIG. 10.

In another solution, the chip system 30 is configured to implement the operations performed by the user plane function network element in the foregoing method embodiments.

For example, the logic circuit 31 is configured to implement processing related operations performed by the user plane function network element in the foregoing method embodiments, for example, processing related operations performed by the user plane function network element in the embodiments shown in FIG. 4, FIG. 6, FIG. 8, and FIG. 10. The input/output interface 32 is configured to implement sending and/or receiving related operations performed by the user plane function network element in the foregoing method embodiments, for example, sending and/or receiving related operations performed by the user plane function network element in the embodiments shown in FIG. 4, FIG. 6, FIG. 8, and FIG. 10.

An embodiment of this application further provides a computer-readable storage medium. The computer-readable storage medium stores computer instructions for implementing the method performed by the device in the foregoing method embodiments.

For example, when the computer program is executed by a computer, the computer is enabled to implement the method performed by the first central unit in the foregoing method embodiments.

For another example, when the computer program is executed by a computer, the computer is enabled to implement the method performed by the second central unit in the foregoing method embodiments.

For another example, when the computer program is executed by a computer, the computer is enabled to implement the method performed by the first distributed unit or the second distributed unit in the foregoing method embodiments.

An embodiment of this application further provides a computer program product. The computer program product includes instructions; and when the instructions are executed by a computer, the method performed by the device (for example, the first central unit, the second central unit, the first distributed unit or the second distributed unit, the terminal device, or the user plane function network element) in the foregoing method embodiments is implemented.

An embodiment of this application further provides a communication system. The communication system includes the first central unit, the first distributed unit, and the second distributed unit that are described above. Optionally, the communication system further includes one or more of the second central unit, the terminal device, and the user plane function network element that are described above.

For explanations and beneficial effect of related content of any one of the apparatuses provided above, refer to the corresponding method embodiments provided above. Details are not described herein again.

In the several embodiments provided in this application, it should be understood that the disclosed apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the foregoing usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
receiving, by a first central unit, data from a user plane function network element;
determining, by the first central unit, time information used by a first distributed unit and a second distributed unit to synchronously transmit the data; and
sending, by the first central unit, the data and the time information to the first distributed unit, and sending the data and the time information to the second distributed unit.

2. A data transmission method, comprising:
receiving, by a first central unit, data from a user plane function network element;
determining, by the first central unit, time information used by a first distributed unit and a second distributed unit to synchronously transmit the data;
sending, by the first central unit, the data and the time information to the first distributed unit; and
sending, by the first central unit to a second central unit, the time information and information indicating the data, wherein the second central unit corresponds to the second distributed unit.

3. The method according to claim 1 or 2, wherein the determining, by the first central unit, time information used by a first distributed unit and a second distributed unit to synchronously transmit the data comprises:
determining, by the first central unit, the time information based on one or more of the following information:
a size of cached data in the first distributed unit, a size of cached data in the second distributed unit, a transmission delay between the first central unit and the first distributed unit, a transmission delay between the first central unit and the second distributed unit, duration for processing the data by the first distributed unit, duration for processing the data by the second distributed unit, a transmission delay between the first distributed unit and a terminal device, a transmission delay between the second distributed unit and the terminal device, and indication information from the first distributed unit and/or the second distributed unit, wherein the indication information is used to adjust the time information.

4. The method according to any one of claims 1 to 3, wherein the method further comprises:
sending, by the first central unit, second configuration information used for communication between the second distributed unit and the terminal device to the second central unit based on first configuration information used for communication between the first distributed unit and the terminal device, wherein the second central unit corresponds to the second distributed unit.

5. The method according to claim 4, wherein
the first configuration information comprises one or more of the following information: channel configuration information of a physical layer of the first distributed unit, configuration information of a media access control layer of the first distributed unit, configuration information of a radio link control layer of the first distributed unit, and configuration information of a packet data convergence protocol layer of the first central unit; and
the second configuration information comprises one or more of the following information: channel configuration information of a physical layer of the second distributed unit, configuration information of a media access control layer of the second distributed unit, configuration information of a radio link control layer of the second distributed unit, and configuration information of a packet data convergence protocol layer of the second central unit.

6. The method according to any one of claims 1 to 5, wherein the method further comprises:
sending, by the first central unit to the second central unit, information for requesting to perform synchronous transmission to the terminal device, wherein the second central unit corresponds to the second distributed unit; and
receiving, by the first central unit from the second central unit, information indicating that the request for performing synchronous transmission to the terminal device is accepted.

7. The method according to any one of claims 1 to 6, wherein before the receiving, by a first central unit, data from a user plane function network element, the method further comprises: determining, by the first central unit, the second central unit based on one or more of the following:
a measurement result of a signal of the second central unit;
a transmission delay between the first central unit and the second central unit; and
a distance between the first central unit and the second central unit.

8. The method according to any one of claims 1 to 7, wherein the time information indicates one or more of the following:
time for processing the data at the packet data convergence protocol layer;
time for processing the data at the radio link control layer;
time for processing the data at the media access control layer; and
time for sending the data to the terminal device.

9. A data transmission method, comprising:
receiving, by a terminal device, information about cached data from a first distributed unit; and
separately sending, by the terminal device, indication information to the first distributed unit and a second distributed unit, wherein the indication information is determined based on the information about the cached data, and the indication information indicates data synchronously transmitted by the first distributed unit and the second distributed unit to the terminal device.

10. The method according to claim 9, wherein the method further comprises:
receiving, by the terminal device, information about cached data from the second distributed unit; and
determining, by the terminal device, the indication information when determining, based on the cached data in the first distributed unit and the cached data in the second distributed unit, that synchronous transmission can be performed.

11. The method according to claim 10, wherein the determining, based on the cached data in the first distributed unit and the cached data in the second distributed unit, that synchronous transmission can be performed comprises:
determining that there is same data between the cached data in the first distributed unit and the cached data in the second distributed unit; or
determining that an amount of cached data in the first distributed unit is the same as an amount of cached data in the second distributed unit; or
determining that a size of the cached data in the first distributed unit is the same as a size of the cached data in the second distributed unit.

12. The method according to any one of claims 9 to 11, wherein the method further comprises:
receiving, by the terminal device, the information about the cached data from the second distributed unit; and
sending a notification message to the first distributed unit and/or the second distributed unit when determining, based on the cached data in the first distributed unit and the cached data in the second distributed unit, that synchronous transmission cannot be performed, wherein the notification message is for notifying that the cached data in the first distributed unit and the cached data in the second distributed unit cannot be synchronously transmitted.

13. The method according to any one of claims 10 to 12, wherein the information about the cached data comprises one or more of the following:
a sequence number of the cached data, an amount of cached data, and a size of the cached data.

14. The method according to any one of claims 9 to 13, wherein before the receiving, by a terminal device, information about cached data from a first distributed unit, the method further comprises:
receiving, by the terminal device, identification information of the second distributed unit from the first distributed unit, wherein the second distributed unit is configured to perform synchronous transmission with the first distributed unit to the terminal device.

15. The method according to any one of claims 9 to 14, wherein the indication information indicates one or more of the following:
a sequence number of the synchronously transmitted data;
a size of the synchronously transmitted data; and
a processing window of the synchronously transmitted data at a radio link control layer.

16. The method according to any one of claims 9 to 15, wherein the method further comprises:
separately sending, by the terminal device, time information to the first distributed unit and the second distributed unit, wherein the time information indicates time for synchronously transmitting the data to the terminal device.

17. A data transmission method, comprising:
receiving, by a first distributed unit, data from a first central unit and time information used by the first distributed unit and a second distributed unit to synchronously transmit the data; and
sending, by the first distributed unit, the data to a terminal device based on the time information.

18. The method according to claim 17, wherein the method further comprises:
retransmitting, by the first distributed unit, the data when the first distributed unit determines that the data fails to be sent.

19. The method according to claim 18, wherein the method further comprises:
sending, by the first distributed unit to the second distributed unit, information indicating that the data fails to be sent.

20. The method according to claim 18 or 19, wherein the retransmitting, by the first distributed unit, the data when the first distributed unit determines that the data fails to be sent comprises:
when the first distributed unit determines that the data fails to be sent, retransmitting, by the first distributed unit, the data at a next available moment of a moment that corresponds to a hybrid automatic repeat request process number and at which the data is sent.

21. The method according to any one of claims 18 to 20, wherein that the first distributed unit determines that the data fails to be sent comprises:
the first distributed unit receives a first feedback message from the terminal device, wherein the first feedback message indicates that the terminal device fails to receive the data; or
the first distributed unit does not receive a second feedback message from the terminal device, wherein the second feedback message indicates that the terminal device successfully receives the data.

22. The method according to any one of claims 17 to 21, wherein the time information indicates one or more of the following:
time for processing the data at a packet data convergence protocol layer;
time for processing the data at a radio link control layer;
time for processing the data at a media access control layer; and
time for sending the data to the terminal device.

23. The method according to any one of claims 17 to 22, wherein the method further comprises:
sending, by the first distributed unit, information about cached data to the first central unit, wherein the information about the cached data is for determining the time information.

24. A communication apparatus, wherein the apparatus comprises one or more functional modules, and the one or more functional modules are configured to perform the method according to any one of claims 1 to 8, the method according to any one of claims 9 to 15, or the method according to any one of claims 16 to 22.

25. A communication apparatus, comprising:
a processor, configured to execute a computer program stored in a memory, so that the apparatus performs the method according to any one of claims 1 to 8, the method according to any one of claims 9 to 16, or the method according to any one of claims 17 to 23.

26. A computer program product, wherein the computer program product comprises instructions used to perform the method according to any one of claims 1 to 8, the method according to any one of claims 9 to 16, or the method according to any one of claims 17 to 23.

27. A computer-readable storage medium, wherein the computer-readable storage medium stores a computer program; and when the computer program is run on a computer, the computer is enabled to perform the method according to any one of claims 1 to 8, the method according to any one of claims 9 to 16, or the method according to any one of claims 17 to 23.
